# NEUE EUROPÄISCHE PATENTSCHRIFT

(11) **EP 2 674 279 B2**
(45) Veröffentlichungstag und Bekanntmachung des Hinweises auf die Entscheidung über den Einspruch: **09.09.2020**
(45) Hinweis auf die Patenterteilung: 13.07.2016
(21) Anmeldenummer: 13167974.8
(22) Anmeldetag: 16.05.2013
(51) Int. Cl.: B29C 53/08

(54) **Verfahren zum Rollbiegen eines Profils, Profil, Verfahren zur Herstellung gebogener Profilwerkstücke, gebogenes Profilwerkstück, Vorrichtung zum Rollbiegen eines Profils sowie Extrusions- und Rollbiegelinie**
Method for roll bending a profile, profile, method for manufacturing curved profile workpieces, curved profile workpiece, device for roll bending a profile as well as an extruded and roll bending line
Procédé de cintrage d'un profil, profil, procédé de fabrication de pièces profilées cintrées, pièces profilée cintrée, dispositif de cintrage d'un profil et ligne d'extrusion et de cintrage

(30) Priorität: 31.05.2012 DE 102012209160
(43) Veröffentlichungstag der Anmeldung: 18.12.2013
(73) Patentinhaber: Samvardhana Motherson Innovative Autosystems B.V. & Co. KG, 96247 Michelau (DE)
(72) Erfinder: Reinlein, Peter, 96247 Michelau (DE); Butz, Bernd, 96264 Altenkunstadt (DE)
(74) Vertreter: Isarpatent

(56) Entgegenhaltungen:
- EP-A2- 0 151 534
- WO-A1-2012/026836
- DE-A1- 10 249 315
- DE-A1- 19 717 232
- DE-A1-102004 002 539
- DE-A1-102007 013 902
- DE-B4-102009 024 075
- DE-T2- 69 722 944
- US-B2- 7 790 085

## Beschreibung

### GEBIET DER ERFINDUNG

Die vorliegende Erfindung betrifft ein Verfahren zum Rollbiegen eines Profils, ein mittels eines derartigen Verfahrens rollgebogenes Profil, ein Verfahren zur Herstellung gebogener Profilwerkstücke, sowie ein mittels eines derartigen Verfahrens hergestelltes gebogenes Profilwerkstück. Darüber hinaus betrifft die Erfindung eine Vorrichtung zum Rollbiegen eines Profils sowie eine Extrusions- und Rollbiegelinie zur Herstellung gebogener Profilwerkstücke, welche eine derartige Vorrichtung aufweist.

### TECHNISCHER HINTERGRUND

In der DE 10 2004 002 539 A1 sind ein Biegeverfahren und eine Biegevorrichtung für das Biegen länglicher Profilkörper, insbesondere das Biegen von Rohren, beschrieben. Ein zunächst gerades Rohr wird hierbei mittels einer Antriebseinheit mit gegenläufigen, angetriebenen Rollen transportiert. Das Biegen dieses Rohres erfolgt mittels eines Paars angetriebener Biegerollen sowie einer in Vorschubrichtung und senkrecht dazu verstellbaren Biegerolle, die auch um eine Achse, die im Wesentlichen parallel zur Vorschubachse verläuft, verdreht werden kann. Um ein dreidimensionales Biegen des Rohrs zu ermöglichen, ist eine Dreheinheit vorgesehen, mittels der das Rohr während des Vorschubs um seine Achse verdreht werden kann.

Der Einsatz eines solchen herkömmlichen Verfahrens und einer solchen herkömmlichen Vorrichtung kann sich jedoch als ungünstig erweisen, wenn das dreidimensional räumlich zu biegende Profil in einem dem Biegen vorgelagerten Herstellungsschritt mit einem kontinuierlichen Verfahren, beispielsweise durch Extrusion, hergestellt werden soll. Ein für ein dreidimensionales Biegen nach dem herkömmlichen Verfahren vorgesehenes Verdrehen des Profils um dessen Vorschubachse erfordert es dann, einen zu biegenden Abschnitt des Profils zuvor vom kontinuierlichen Strang abzutrennen. Darüber hinaus sind das herkömmliche Biegeverfahren und die herkömmliche Biegevorrichtung, unter anderem wegen des bereits angesprochenen erforderlichen Verdrehens des Profils, bei unregelmäßigen, unrunden Profilquerschnitten - wie etwa bei leisten- oder rinnenförmigen Profilen - unvorteilhaft.

Ferner kann die Verwendung angetriebener Antriebs- und Biegerollen, wie sie bei der herkömmlichen Vorrichtung vorgesehen sind, dazu führen, dass bei dem Biegevorgang auf einer mit den Rollen in Berührung kommenden Außenoberfläche des Profils sichtbare Spuren hinterlassen werden. Falls es sich bei der Außenoberfläche des Profils zumindest bereichsweise um eine spätere Sichtfläche handelt, sind solche Beeinträchtigungen der Oberflächenqualität unter ästhetischen Gesichtspunkten nicht wünschenswert.

Dies ist ein Zustand, den es zu verbessern gilt.

### ZUSAMMENFASSUNG DER ERFINDUNG

Vor diesem Hintergrund liegt der vorliegenden Erfindung die Aufgabe zugrunde, verbesserte Verfahren für das Biegen von Profilen und die Herstellung gebogener Profilwerkstücke vorzuschlagen, welche die genannten Nachteile vermeiden und eine ökonomische, arbeitskraft- und materialsparende Fertigung gebogener Profile ermöglichen. Darüber hinaus wird ein formgenaues Biegen auch unrunder Profile angestrebt, wobei zudem die Querschnittsgeometrie derselben durch den Biegevorgang möglichst nicht durch Verdrücken oder ähnliches beeinträchtigt werden soll. Ferner sollen eine dahingehend verbesserte Biegevorrichtung und eine verbesserte Fertigungslinie für gebogene Profilwerkstücke angegeben werden.

Die US 7,790,085 B2 beschreibt ein Verfahren mit den Merkmalen des Oberbegriffs des Patentanspruchs 1. Es ist dabei zumindest nicht vorgesehen einen zweiten Biegerollensatz derart auszurichten, dass ein Profil in den Durchgang des zweiten Biegerollensatzes senkrecht zu einer Ebene der Rollendrehachsen des zweiten Biegerollensatzes einläuft.

Erfindungsgemäß wird diese Aufgabe durch ein Verfahren zum Rollbiegen eines Profils mit den Merkmalen des Patentanspruchs 1 und/oder durch ein Verfahren zur Herstellung gebogener Profilwerkstücke mit den Merkmalen des Patentanspruchs 8 und/oder durch eine Vorrichtung zum Rollbiegen eines Profils mit den Merkmalen des Patentanspruchs 10 gelöst.

Demgemäß ist ein Verfahren zum Rollbiegen eines Profils mit den Merkmalen des Anspruchs 1 vorgesehen.

Dies bedeutet, dass die Translationen des zweiten Biegerolensatzes längs der beiden Raumrichtungen und die Rotationen desselben um die beiden Rotationsachsen jeweils während einer Dauer und in einer zeitlichen Abfolge bewirkt werden, die erforderlich und geeignet sind, um dem Profil eine gewünschte, räumlich gebogene Form zu geben und zugleich eine möglichst schonende Führung des Profils zu erreichen. Insbesondere können hierbei auch die Geschwindigkeit, mit der der zweite Biegerollensatz translatorisch bewegt wird, und die Winkelgeschwindigkeit, mit der der zweite Biegerollensatz rotatorisch bewegt wird, unter Berücksichtigung der gewünschten Biegeform und der Geschwindigkeit, mit der das Profil eingeschoben wird, gewählt und bei Bedarf zeitlich variiert werden.

Gemäß der Erfindung wird zudem ein Profil vorgeschlagen, welches zumindest einen Querschnittsbereich aufweist, der aus einem durch Extrusion geformten Kunststoffmaterial ausgebildet ist, und welches mittels eines derartigen Verfahrens zum Rollbiegen eines Profils rollgebogen wurde.

Darüber hinaus ist erfindungsgemäß ein Verfahren zur Herstellung gebogener Profilwerkstücke mittels einer Extrusions- und Rollbiegelinie vorgesehen. Bei diesem Verfahren wird ein Profil als ein kontinuierlicher Strang mittels eines Extrusionswerkzeugs in zumindest einem Querschnittsbereich aus einem durch Extrusion geformten Kunststoffmaterial ausgebildet. Im Anschluss an den Extrusionsvorgang werden innerhalb der Extrusions- und Rollbiegelinie aufeinanderfolgende Abschnitte des Profils zur Bildung der gebogenen Profilwerkstücke mittels des vorstehend beschriebenen, erfindungsgemäßen Verfahrens zum Rollbiegen eines Profils einem Rollbiegen unterzogen.

Erfindungsgemäß wird ferner ein gebogenes Profilwerkstück bereitgestellt, welches zumindest einen Querschnittsbereich aufweist, der aus einem durch Extrusion geformten Kunststoffmaterial ausgebildet ist, und welches mittels eines derartigen Verfahrens zur Herstellung gebogener Profilwerkstücke hergestellt ist.

Weiterhin schlägt die Erfindung eine Vorrichtung zum Rollbiegen eines Profils mit den Merkmalen des Anspruchs 10 vor.

Darüber hinaus stellt die Erfindung eine Extrusions- und Rollbiegelinie zur Herstellung gebogener Profilwerkstücke bereit, welche ein Extrusionswerkzeug und eine derartige Vorrichtung zum Rollbiegen aufweist. Das Extrusionswerkzeug ist dafür eingerichtet, ein Profil als einen kontinuierlichen Strang in zumindest einem Querschnittsbereich aus einem durch Extrusion geformten Kunststoffmaterial auszubilden. Die Vorrichtung zum Rollbiegen des Profils ist auf einer Austrittsseite des Extrusionswerkzeugs angeordnet und ist dafür vorgesehen, im Anschluss an den Extrusionsvorgang aufeinanderfolgende Abschnitte des Profils zur Bildung der gebogenen Profilwerkstücke einem Rollbiegen zu unterziehen.

Die der Erfindung zugrunde liegende Idee besteht darin, dass es durch das vorstehend erläuterte Translahieren und Rotieren des zweiten Biegerollensatzes relativ zu dem ersten Biegerollensatz vermieden werden kann, das Profil beim dreidimensionalen Biegen um seine Vorschubrichtung zu verdrehen, bevor es zwischen jene Rollen gelangt, die die eigentliche Biegung herbeiführen. Das Rollbiegen kann bei der vorliegenden Erfindung als ein so genanntes 3D-Inline-Rollbiegen erfolgen, das heißt der Biegevorgang kann vorteilhaft gemeinsam mit dem Extrudieren eines Profilstrangs ohne vorheriges Ablängen als ein kontinuierlicher Prozess innerhalb ein- und derselben Fertigungslinie erfolgen. Alternativ hierzu können aber mittels des erfindungsgemäßen Verfahrens zum Rollbiegen und der erfindungsgemäßen Vorrichtung auch bereits abgelängte, gerade, zu biegende Profilstrangstücke, bei denen ein Verdrehen um die Vorschubrichtung aus anderen Gründen nicht gewünscht wird oder vermieden werden soll, rollgebogen werden. Darüber hinaus ermöglicht die Erfindung dadurch, dass auf das Verdrehen des Profils um die Vorschubrichtung, wie es bei dem herkömmlichen Verfahren nötig ist, verzichtet werden kann, ein erheblich verbessertes Biegen von Profilen mit unrunden Querschnitten, bei denen dieses Verdrehen ungünstig oder undurchführbar ist.

Die Beweglichkeit des zweiten Biegerollensatzes kommt darüber hinaus der Oberflächengüte des gebogenen Profils zugute. Beispielsweise kann der zweite Biegerollensatz entlang der ersten der beiden nichtparallelen Raumrichtungen translahiert und um die erste der beiden Rotationsachsen rotiert werden, um das Profil um die erste Biegeachse, die eine Hauptbiegeachse des Profils sein kann, zu biegen. Durch Rotieren um die erste Rotationsachse und Translahieren entlang der ersten Raumrichtung können die Biegerollen des zweiten Biegerollensatzes derart ausgerichtet werden, dass das Profil während des Biegens stets in der optimalen Ausrichtung durch den zwischen den Biegerollen ausgebildeten Durchgang, der das Führen des Profils ermöglichen soll, hindurchtritt. Klemmen, Reiben und Schlupf zwischen Außenoberflächen des Profils und Oberfächen der Biegerollen des zweiten Biegerollensatzes werden auf diese Weise vermieden, und Sichtflächen des Profils werden nicht verdrückt oder verkratzt.

In entsprechender Weise kann der zweite Biegerollensatz relativ zu dem ersten Biegerollensatz entlang der zweiten der beiden Raumrichtungen translahiert und um die zweite der beiden Rotationsachsen rotiert werden, um das Profil um die zweite Biegeachse, die eine Nebenbiegeachse des Profils sein kann, zu biegen. In gleicher Weise wie für die Biegung um die erste Biegeachse beschrieben, kann durch das Translahieren entlang der zweiten Raumrichtung und das Rotieren um die zweite Rotationsachse wiederum erzielt werden, dass das Profil in optimaler Ausrichtung in den zwischen den Biegeräumen des zweiten Biegerollensatzes gebildeten Durchgang einläuft.

Auf diese Weise vermeidet die Erfindung vorteilhaft beim Biegen, die Oberfläche des Profils zu verkratzen oder zu verunstalten. Gerade bei Profilen, die zumindest bereichsweise mit einer Sichtfläche aus einem Kunststoffmaterial ausgebildet sind, kann dies besonders nützlich sein, um ein einwandfreies Produkt zu erhalten.

Bei einem Wechsel des Profilquerschnitts ist es bei der Erfindung ausreichend, lediglich den ersten und den zweiten Biegerollensatz, deren Durchgänge das Profil führen und hierdurch ein zuverlässiges und formgenaues Biegen ermöglichen, durch zwei Biegerollensätze mit anderen Durchgängen auszutauschen. Eine Änderung der Biegeform erfordert bei der Erfindung keinen Werkzeugwechsel, sondern lediglich eine Änderung in der Abfolge der Rotationen und Translationen des zweiten Biegerollensatzes. Werden die Rotationen und Translationen zum Beispiel mit Hilfe eines Rechners programmgesteuert bewirkt, so reicht es aus, bei einer Änderung der Biegeform das Steuerprogramm geeignet abzuändern. Im Vergleich zu Verfahren, die ein für die jeweilige Biegeform speziell gefertigtes Werkzeug (Kern) erforderlich machen, wie beispielsweise dem Streckbiegen, werden bei der Erfindung in erheblichem Maße Flexibilität gewonnen sowie Kosten und Arbeitszeit gespart.

Die erfindungsgemäß vorgeschlagenen Profile und gebogenen Profilwerkstücke können auf effiziente und materialschonende Weise derart gebogen werden, dass ihre Längserstreckung einer komplizierten, frei wählbaren räumlichen Bahnkurve folgt. Sie weisen sehr vorteilhaft eine unbeschädigte Außenoberfläche hoher Güte ohne sichtbare Fertigungsspuren, Riefen oder andere Beschädigungen auf.

Vorteilhafte Ausgestaltungen und Weiterbildungen ergeben sich aus den weiteren Unteransprüchen sowie aus der Beschreibung unter Bezugnahme auf die Figuren der Zeichnung.

Bei einer Weiterbildung des erfindungsgemäßen Verfahrens zum Rollbiegen sind die ersten und zweiten Raumrichtungen zu einer Einschieberichtung, längs der das Einschieben des Profils erfolgt, jeweils geneigt ausgerichtet. Vorzugsweise verlaufen die beiden Raumrichtungen jeweils im Wesentlichen senkrechtzu der Einschieberichtung. Dies ermöglicht ein Biegen des Profils um zwei zu der Einschieberichtung geneigte, insbesondere zu dieser im Wesentlichen senkrechte Biegeachsen.

In einer weiteren Ausgestaltung des Verfahrens zum Rollbiegen sind die ersten und zweiten Raumrichtungen im Wesentlichen senkrecht zueinander ausgerichtet. Auf diese Weise wird ein Biegen um zwei zueinander im Wesentlichen senkrechte erste und zweite Biegeachsen möglich.

In einer vorteilhaften Weiterbildung des Verfahrens zum Rollbiegen verläuft die erste Rotationsachse im Wesentlichen senkrecht zu der ersten Raumrichtung, wobei für das Biegen um die erste Biegeachse die Rotation um die erste Rotationsachse simultan mit der Translation entlang der ersten Raumrichtung erfolgt. Der zwischen den Biegerollen des ersten Biegerollensatzes ausgebildete Durchgang kann dadurch zu jedem Zeitpunkt während der Translation längs der ersten Raumrichtung derart ausgerichtet werden, dass das Profil auch bei gegenüber der Einschieberichtung entlang der ersten Raumrichtung translatorisch verschobenem Durchgang optimal in diesen einläuft und dadurch nicht verdrückt wird und die Rollen möglichst ohne zu gleiten auf dem Profil abrollen.

In einer Ausgestaltung des Verfahren zum Rollbiegen wird das Profil durch die Biegerollen der Biegerollensätze, in einem Querschnitt des Profils betrachtet, allseitig geführt. Eine derartige, besonders zuverlässige Führung ermöglicht ein genaues Freiformbiegen in jede Raumrichtung.

Bei einer weiteren Ausgestaltung des Verfahrens zum Rollbiegen wird der zweite Biegerollensatz mit zu mindest einem Paar von Biegerollen ausgebildet, wobei die Biegerollen des Paares Rollendrehachsen aufweisen, die zueinander parallel verlaufen. Hierdurch gelingt es insbesondere, das Profil beim Biegen von zwei gegenüberliegenden Seiten her sicher zu führen.

In einer Weiterbildung des Verfahrens zum Rollbiegen wird der zweite Biegerollensatz mit zwei Paaren von Biegerollen ausgebildet, wobei die Rollendrehachsen der Biegerollen des jeweiligen Paars zueinander parallel verlaufen. Auf diese Weise kann das Profil derart geführt werden, dass seine Position in einer Ebene normal zu einer Bahnkurve, der das gebogene Profil folgt, durch die auf seinen Oberflächen abrollenden Biegerollen definiert festgelegt wird.

Bei einer weiteren Ausgestaltung des Verfahrens zum Rollbiegen liegen die Rollendrehachsen der Biegerollen des zweiten Biegerollensatzes in einer Ebene. Dadurch kann das Profil durch Oberflächenkontakt entlang in dieser Ebene liegender Berührlinien mit den Biegerollen geführt werden. Auf diese Weise können die Biegerollen des zweiten Biegerollensatzes gemeinsam translahiert und um ein gemeinsames Zentrum um die ersten und zweiten Rotationsachsen rotiert werden, ohne dass sich das Profil in dem Durchgang verklemmt oder die realisierbaren Biegeradien unnötig eingeschränkt werden.

In einer vorteilhaften Ausgestaltung des Verfahrens zum Rollbiegen verläuft die zweite Rotationsachse stets parallel zu den Rollendrehachsen eines der Paare der Biegerollen des zweiten Biegerollensatzes verläuft. Beim Rotieren des zweiten Biegerollensatzes um die zweite Rotationsachse können die Biegerollen dieses Paars hierbei auf dem Profil abrollen.

Erfindungsgemäß erfolgt für das Biegen um die zweite Biegeachse die Rotation um die zweite Rotationsachse simultan mit der Translation entlang der zweiten Raumrichtung. Diese Verbesserung bewirkt, dass der Durchgang des zweiten Biegerollensatzes auch bei dem Biegen um die zweite Biegeachse stets optimal zu dem einlaufenden Profil ausgerichtet werden kann.

Bevorzugt erfolgen die simultan mit der Translation längs der ersten Raumrichtung ausgeführte Rotation um die erste Rotationsachse und die simultan mit der Translation längs der zweiten Raumrichtung ausgeführte Rotation um die zweite Rotationsachse in der Weise, dass das Profil stets im Wesentlichen senkrecht zu der Ebene, in der die Rollendrehachsen der Biegerollen des zweiten Biegerollensatzes liegen, von dem ersten Biegerollensatz kommend in den Durchgang des zweiten Biegerollensatzes einläuft.

In einer Ausgestaltung des Verfahrens zum Rollbiegen umfasst das Bewegen des zweiten Biegerollensatzes ein zu dessen Rotationen und Translationen zumindest zeitweise simultanes und/oder in vorbestimmter Folge zu diesen zeitlich versetztes zusätzliches Rotieren des zweiten Biegerollensatzes relativ zu dem ersten Biegerollensatz um eine dritte Rotationsachse. Die dritte Rotationsachse verläuft hierbei in einem in dem Durchgang des zweiten Biegerollensatzes aufgenommenen Bereich des Profils im Wesentlichen tangential zu einer Bahnkurve des Profils. Hierdurch wird das Profil bei dieser Ausgestaltung zusätzlich zur Biegung um die erste Biegeachse und um die zweite Biegeachsewenigstens bereichsweise mit einem Drall versehen. Durch diese Ausgestaltung werden die Gestaltungsmöglichkeiten hinsichtlich der räumlichen Form des gebogenen Profils noch erweitert.

In einer weiteren Ausgestaltung des Verfahrens zum Rollbiegen werden die Biegerollen des ersten Biegerollensatzes jeweils ausschließlich durch die Bewegung des Profils während des Einschiebens desselben in Drehung versetzt. Ferner werden die Biegerollen des zweiten Biegerollensatzes jeweils ausschließlich durch die Bewegung des Profils während des Einschiebens desselben und durch die Rotationen des zweiten Biegerollensatzes um die ersten und zweiten Rotationsachsen in Drehung versetzt. Die Biegerollen rollen hierbei auf dem Profil ab. Mit "ausschließlich" soll gemeint sein, dass die Drehung der Biegerollen um ihre jeweiligen Rollendrehachsen allein durch einen Oberflächenkontakt der jeweiligen Biegerollen mit dem Profil beim Einschieben desselben im Wesentlichen durch Haftreibung herbeigeführt wird. Allerdings können sich durch das Rotieren des zweiten Biegerollensatzes um die ersten und zweiten Rotationsachsen durch Verschiebung der Rollendrehachsen der Biegerollen im Raum der jeweiligen Drehung der Biegerollen des zweiten Biegerollensatzes um ihre Rollendrehachsen zusätzliche Winkelgeschwindigkeiten überlagern. Dieser Vorgang soll von dem Begriff "ausschließlich" mit umfasst sein. Mit anderen Worten, die Biegerollen des ersten und zweiten Biegerollensatzes werden nicht zum Transportieren des Profils angetrieben. Stattdessen kann sich die Drehung jeder der Biegerollen um deren Rollendrehachse gemäß dem Profilvorschub und der Bewegung des zweiten Biegerollensatzes frei einstellen. Die Oberfläche des zu biegenden Profils wird dadurch geschont, was besonders vorteilhaft ist, wenn das Profil Sichtflächen aufweist.

In einer weiteren Ausgestaltung des Verfahrens zum Rollbiegen wird das Einschieben des Profils mittels einer Abzugsbandanordnung bewirkt. Eine derartige Anordnung (auch Abzug genannt) kann vorteilhaft in der Weise ausgeführt werden, dass der Antrieb des Profils zum Transportieren und Einschieben desselben über einen vergleichsweise großen Oberflächenbereich des Profils erfolgt. Insbesondere kann eine auf die Oberfläche des Profils aufgebrachte Reibungskraft, die dem Transportieren des Profils dient, über eine relativ große Fläche verteilt werden. Auf diese Weise wird ebenfalls die Oberfläche des Profils vorteilhaft geschont.

Bei einer Weiterbildung des Verfahrens zum Rollbiegen weist die Abzugsbandanordnung zwei abschnittsweise parallel zueinander verlaufende, vorzugsweise endlose, Bänder oder Raupenketten mit jeweils einer nachgiebigen, dem Profil zugewandten Oberfläche auf. Gemäß dieser Weiterbildung wird das zu biegende Profil für das Einschieben durch einen Oberflächenkontakt mit den Bändern oder den Raupenketten zwischen den Bändern oder den Raupenketten transportiert. Derartige Bänder und/oder Raupenketten mit nachgiebiger Oberfläche können zusätzlich dazu beitragen, Oberflä-chenschäden an dem Profil zu vermeiden.

In einer weiteren Weiterbildung des Verfahrens zum Rollbiegen durchläuft das Profil vor dem Einschieben in den ersten Biegerollensatz zunächst eine Einlaufführung mit einem oder mehreren Sätzen von Führungsrollen zur Führung des Profils und zum Verhindern eines Ausknickens des Profils. Hierbei wird das Profil in die Einlaufführung eingeschoben und tritt an einem ausgangsseitigen Ende der Einlaufführung in den Durchgang des ersten Biegerollensatzes ein. Ferner werden hierbei die Führungsrollen ausschließlich durch die Bewegung des Profils während des Einschieben desselben in Drehung um ihre jeweiligen Rollendrehachsen versetzt. Mittels einer derartigen Einlaufführung kann vorteilhaft verhindert werden, dass das Profil, auf das zum Einschieben eine Kraft entlang seiner Längsrichtung, welche die bevorzugte Vorschubrichtung darstellt, aufgebracht wird, unter dieser Kraft ausknickt. Durch das zusätzliche Führen des Profils mittels der Einlaufführung tritt das Profil darüber hinaus auf günstige Weise in einer genau definierten Orientierung in den Durchgang des ersten Biegerollensatzes ein. Allein durch den Einschiebevorgang in Drehung versetzte Führungsrollen, die, wie die Biegerollen, nicht zum Transportieren des Profils angetrieben werden, tragen wiederum zur Schonung der Profiloberfläche bei.

Bei einer Ausgestaltung des erfindungsgemäßen Verfahrens zur Herstellung gebogener Profilwerkstücke wird während des Extrusionsvorgangs innerhalb des Extrusionswerkzeugs zumindest eine Armierung aus einem Metallwerkstoff, insbesondere einem Stahl, in das Kunststoffmaterial zumindest teilweise eingebettet. Auf diese Weise gelingt es, innerhalb nur einer einheitlichen Fertigungslinie ein durch Extrudieren eines Kunststoffmaterials hergestelltes, mit einer Metallarmierung oder -einlage verstärktes, dreidimensional freiformgebogenes Profilwerkstück hoher Qualität zu erzeugen, und dies auf besonders wirtschaftliche Weise.

In einer weiteren Ausgestaltung des Verfahrens zur Herstellung gebogener Profilwerkstücke wird jeweils einer der Abschnitte des Profils nach dem Durchlaufen des ersten Biegerollensatzes und des zweiten Biegerollensatzes mittels einer auf einer Ausgangsseite des zweiten Biegerollensatzes im Raum bewegbaren Trenneinrichtung zur Bildung eines der gebogenen Profilwerkstücke von dem kontinuierlichen Strang abgetrennt. Insbesondere kann ein Positionieren der Trenneinrichtung durch Bewegen derselben im Raum sowie ein Aktivieren der Trenneinrichtung zum Durchtrennen des Strangs in Abhängigkeit von einer gemessenen Vorschublänge des Profilstrangs erfolgen. Beispielsweise kann diese Vorschublänge im Bereich der Einlaufführung gemessen werden. Das Abtrennen der gebogenen Profilwerkstücke vom kontinuierlichen Strang kann somit automatisiert und programmgesteuert erfolgen, und die Beweglichkeit der Trenneinrichtung im Raum ermöglicht es, die Trenneinrichtung genau an die Stelle im Raum zu verfahren, an der das aus dem zweiten Biegerollensatz entlang seiner gekrümmten Bahnkurve heraustretende, sich bei dem Biegevorgang bewegende Profilwerkstück abgeschnitten werden soll.

Bei einer weiteren, vorteilhaften Weiterbildung des Verfahrens zur Herstellung gebogener Profilwerkstücke wird der Abschnitt des Profils nach dem Austritt aus dem zweiten Biegerollensatz auf dessen Ausgangsseite mittels einer Handhabungseinrichtung gegriffen, bevor oder während der Abschnitt von dem kontinuierlichen Strang abgetrennt wird. Die Handhabungseinrichtung wird hierbei einer mit dem Rollbiegen einhergehenden räumlichen Bewegung des Abschnitts nachgeführt, und das erzeugte gebogene Profilwerkstück wird nach dem Abtrennen von dem kontinuierlichen Strang mittels der Handhabungseinrichtung für eine Weiterverarbeitung oder Lagerung weitertransportiert und/oder abgelegt. Auf diese Weise kann einerseits durch das Greifen vor dem Abtrennen vermieden werden, dass sich die bereits gebogenen Profilwerkstücke, dann, wenn sie noch nicht vom kontinuierlichen Strang abgetrennt sind und aus dem zweiten Biegerollensatz herausragen, unter ihrem eigenen Gewicht auf unerwünschte Weise verformen und dadurch die Genauigkeit der erzeugten, gebogenen Form des Profils verschlechtert wird. Die Handhabungseinrichtung kann dementsprechend dafür vorgesehen sein, den Abschnitt des Profils bereits dann zu greifen und zu unterstützen, wenn er noch nicht vollständig aus dem zweiten Biegerollensatz herausgetreten ist. Andererseits wird bei dieser Weiterbildung auch ein Herunterfallen des Profilwerkstücks beim Abtrennen verhindert. Ein manuelles Festhalten und Ablegen der gebogenen Profilwerkstücke durch einen Arbeiter/eine Arbeiterin kann vermieden werden, was einerseits der Arbeitssicherheit, andererseits auch der Formtreue der erzeugten Profile zugute kommt.

In einer Ausgestaltung der erfindungsgemäßen Vorrichtung zum Rollbiegen eines Profils sind die ersten und zweiten Raumrichtungen zu einer Einschieberichtung, längs der das Profil in den ersten Biegerollensatz einschiebbar ist, jeweils geneigt, vorzugsweise jeweils im Wesentlichen senkrecht ausgerichtet. Hierdurch wird ein Biegen um zu der Einschieberichtung geneigte, bevorzugt im Wesentlichen senkrechte zu dieser ausgerichtete erste und zweite Biegeachsen möglich.

In einer weiteren Ausgestaltung der Vorrichtung zum Rollbiegen sind die ersten und zweiten Raumrichtungen im Wesentlichen senkrecht zueinander ausgerichtet. Diese Maßnahme ermöglicht ein Biegen um zwei im Wesentlichen senkrecht zueinander verlaufende Biegeachsen.

Bei einer Verbesserung der Vorrichtung zum Rollbiegen verläuft die erste Rotationsachse im Wesentlichen senkrecht zu der ersten Raumrichtung. Ferner ist hierbei der Biegekopf derart mit dem Rahmen gekoppelt, dass für das Biegen des Profils um die erste Biegeachse der Biegekopf relativ zu dem Rahmen eine kombinierte Rotations- und Translationsbewegung ausführen kann, bei der die Rotation um die erste Rotationsachse simultan mit der Translation entlang der ersten Raumrichtung erfolgt. Hierdurch wird wiederum ein optimales Ausrichten des Durchgangs des zweiten Biegerollensatzes relativ zu dem einlaufenden Profil möglich.

In einer vorteilhaften und bevorzugten Ausgestaltung der Vorrichtung zum Rollbiegen weist die Vorrichtung zumindest ein erstes Verbindungsbauteil und zumindest ein zweites Verbindungsbauteil auf. Hierbei verbindet jedes der ersten und zweiten Verbindungsbauteile den Biegekopf mit dem Rahmen über gelenkige Verbindungen derart, dass zwischen den gelenkigen Verbindungen angeordnete Bereiche des Biegekopfes und des Rahmens sowie die Verbindungsbauteile ein Viergelenk bilden, das die kombinierte Rotations- und Translationsbewegung des Biegekopfes relativ zu dem Rahmen für das Biegen des Profils um die erste Biegeachse ermöglicht. Beispielsweise kann es sich bei der ersten Biegeachse um eine Hauptbiegeachse des Profils handeln. Eine derartige Viergelenkkinematik kann derart ausgelegt werden, durch geeignete Positionierung und Beabstandung der gelenkigen Verbindungen, dass das Translahieren des Biegekopfes entlang der ersten Raumrichtung durch die Kopplung des Biegekopfes mit dem Rahmen über die Verbindungselemente bereits mit der erwünschten Rotationsbewegung des Biegekopfes um die erste Rotationsachse einhergeht. Die Translationsbewegung entlang der ersten Raumrichtung und die Rotationsbewegung um die erste Rotationsachse können daher beispielsweise mittels einer einzigen Stelleinrichtung bewirkt werden.

In einer Ausgestaltung der Vorrichtung zum Rollbiegen koppeln die ersten und zweiten Verbindungsbauteile jeweils zwei der gelenkigen Verbindungen über Kreuz miteinander.

Gemäß einer Weiterbildung der Vorrichtung zum Rollbiegen ist der zweite Biegerollensatz mit zumindest einem Paar von Biegerollen ausgebildet, welche Rollendrehachsen aufweisen, die zueinander parallel verlaufen. Mittels des Biegerollenpaares kann das Profil beim Biegen von zwei gegenüberliegenden Seiten desselben her sicher geführt werden.

Bei einer weiteren Weiterbildung der Vorrichtung zum Rollbiegen ist der zweite Biegerollensatz mit zwei Paaren von Biegerollen ausgebildet, wobei die Rollendrehachsen der Biegerollen des jeweiligen Paars zueinander parallel verlaufen. Hierdurch kann die Position des Profils in einer Ebene normal zu dessen Bahnkurve beim Führen definiert festgelegt werden.

Gemäß einer noch weiteren Weiterbildung der Vorrichtung zum Rollbiegen ist der zweite Biegerollensatz derart mit dem Biegekopf gekoppelt, dass die zweite Rotationsachse stets parallel zu den Rollendrehachsen eines der Paare der Biegerollen des zweiten Biegerollensatzes verläuft. Der zweite Biegerollensatz kann somit in der Weise um die zweite Rotationsachse rotiert werden, dass die Biegerollen des Paares auf dem Profil abrollen.

Erfindungsgemäß ist der zweite Biegerollensatz derart mit dem Biegekopf gekoppelt, dass für das Biegen um die zweite Biegeachse die Rotation um die zweite Rotationsachse simultan zu der Translation entlang der zweiten Raumrichtung bewirkbar ist. Auch bei dem Biegen um die zweite Biegeachse kann dadurch eine optimale Ausrichtung des Durchgangs des zweiten Biegerollensatzes relativ zu dem Profil erreicht werden.

Bei einer weiteren Ausgestaltung der Vorrichtung zum Rollbiegen liegen die Rollendrehachsen der Biegerollen des zweiten Biegerollensatzes in einer Ebene, wodurch der zweite Biegerollensatz ohne wesentliche Einschränkung der realisierbaren Biegeradien um die ersten und zweiten Rotationsachsen rotierbar ist.

Bei einer Weiterentwicklung der Vorrichtung zum Rollbiegen ist der zweite Biegerollensatz ferner derart mit dem Biegekopf gekoppelt, dass der zweite Biegerollensatz relativ zu dem ersten Biegerollensatz um eine dritte Rotationsachse, welche in einem in dem Durchgang des zweiten Biegerollensatzes aufgenommenen Bereich des Profils im Wesentlichen tangential zu einer Bahnkurve des Profils verläuft, rotierbar ist, um das Profil zusätzlich zur Biegung um die erste Biegeachse und um die zweite Biegeachse wenigstens bereichsweise mit einem Drall zu versehen. Dies steigert die Gestaltungsfreiheit hinsichtlich der räumlich gebogenen Form eines mittels der Vorrichtung rollgebogenen Profils.

Bei einer weiteren Verbesserung der Vorrichtung zum Rollbiegen sind die Biegerollen des ersten Biegerollensatzes und die Biegerollen des zweiten Biegerollensatzes um ihre jeweiligen Rollendrehachsen frei drehbar gelagert. Durch diese Maßnahme werden die Biegerollen allein durch das Einschieben des Profils in Drehung um ihre Rollendrehachsen versetzt, wobei bei den Biegerollen des zweiten Biegerollensatzes eine aus der Rotation um die ersten und zweiten Rotationsachsen resultierende Winkelgeschwindigkeit sich der Drehung der Biegerollen um ihre Rollendrehachsen überlagern kann. Dadurch, dass die Biegerollen hierbei nicht zum Transport des Profils angetrieben werden, wird die Profiloberfläche beim Biegen mittels der Vorrichtung geschont.

In einer weiteren, vorteilhaften Ausgestaltung der Vorrichtung zum Rollbiegen weist die Vorrichtung ferner eine Einlaufführung auf. Die Einlaufführung weist einen oder mehrere Sätze von Führungsrollen zur Führung des Profils und zum Verhindern eines Ausknickens des Profils auf. Hierbei ist die Einlaufführung derart angeordnet, dass das in die Einlaufführung eingeschobene Profil an einem ausgangsseitigen Ende der Einlaufführung nach Durchlaufen derselben in den Durchgang des ersten Biegerollensatzes eintritt. Die Führungsrollen sind hierbei um ihre jeweiligen Rollendrehachsen frei drehbar gelagert und tragen ebenfalls dazu bei, Oberflächenbeschädigungen an dem Profil zu vermeiden. Die Einlaufführung ermöglicht es vorteilhaft, das eingeschobene Profil ohne Ausknicken in definierter Ausrichtung in den Durchgang des ersten Biegerollensatzes hineinzufüh-ren.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNGEN

Die vorliegende Erfindung wird nachfolgend anhand der in den schematischen Figuren der Zeichnung angegebenen Ausführungsbeispiele näher erläutert. Hierbei zeigen:
- Fig. 1: eine schematische Veranschaulichung des Rollbiegens eines Profils gemäß einem Ausführungsbeispiel der Erfindung, in einer Seitenansicht, wobei übereinander drei verschiedene, aufeinanderfolgende Stadien eines Rollbiegevorgangs beispielhaft gezeigt sind;
- Fig. 2: die in der Fig. 1 dargestellten Stadien des Rollbiegevorgangs, jeweils in einer Draufsicht;
- Fig. 3: eine schematische Vorderansicht eines von einem Rahmen getragenen ersten oder zweiten beispielhaften Biegerollensatzes, sowie ein beispielhaftes Profil in einem Querschnitt;
- Fig. 4: eine schematische Seitenansicht einer Vorrichtung zum Rollbiegen, wobei auch eine Abzugsbandanordnung zum Einschieben des Profils gezeigt ist;
- Fig. 5: eine schematische Vorderansicht eines Biegekopfes der Vorrichtung gemäß dem Ausführungsbeispiel der Fig. 4;
- Fig. 6: eine Extrusions- und Rollbiegelinie gemäß einem weiteren Ausführungsbeispiel der Erfindung, mit einer Vorrichtung zum Rollbiegen, einer Abzugsbandanordnung und einem Extrusionswerkzeug, wobei zusätzlich ein Extruder schematisch angedeutet ist;
- Fig. 7: eine Extrusions- und Rollbiegelinie gemäß einem weiteren Ausführungsbeispiel der Erfindung, wiederum in einer Seitenansicht; und
- Fig. 8: eine Seitenansicht einer Vorrichtung zum Rollbiegen gemäß einem noch weiteren Ausführungsbeispiel der Erfindung, wobei wiederum eine Abzugsbandanordnung zum Einschieben des Profils angedeutet ist.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleichwirkende Elemente, Merkmale und Komponenten - sofern nichts Anderes ausgeführt ist - jeweils mit denselben Bezugszeichen versehen.

### BESCHREIBUNG VON AUSFÜHRUNGSBEISPIELEN

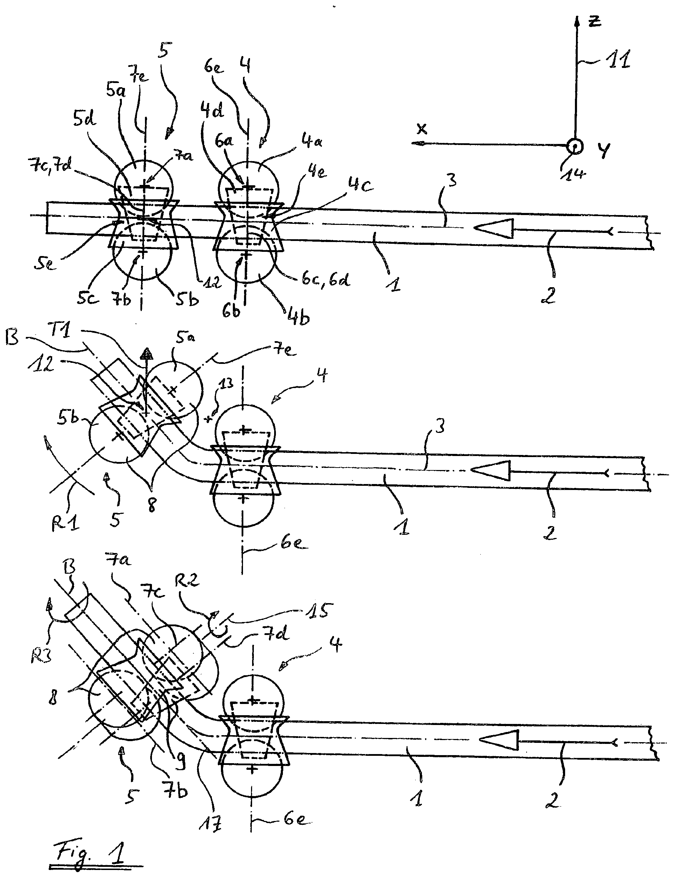

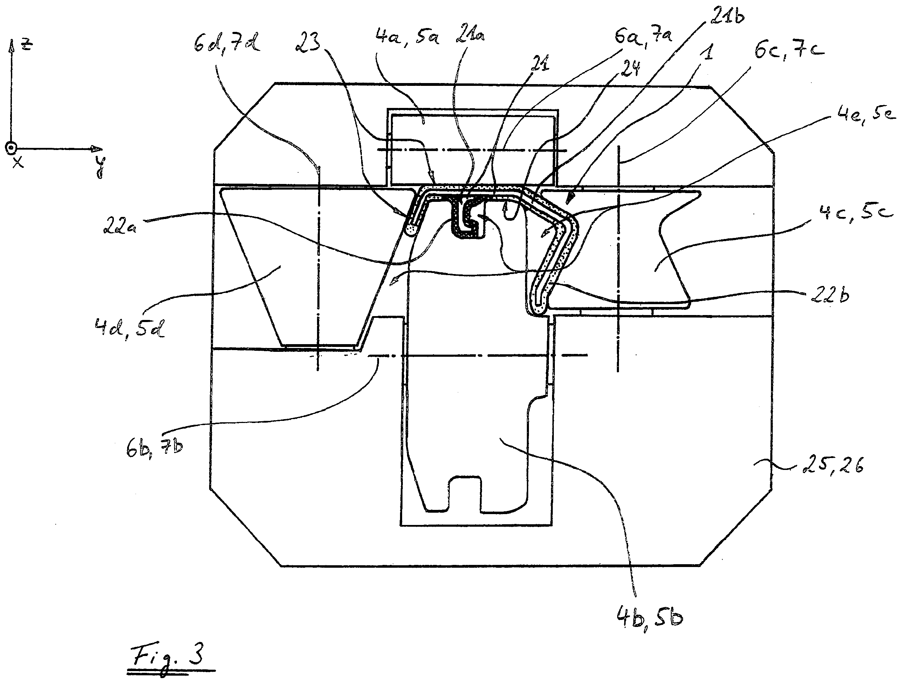

In der Fig. 1 ist in einer Seitenansicht das Rollbiegen eines Profils 1 gemäß einem Ausführungsbeispiel der Erfindung gezeigt. Wie im obersten Teil der Fig. 1 gezeigt ist, wird das Profil 1 entlang einer Einschieberichtung 2, die im oberen Teil der Fig. 1 im Wesentlichen parallel zu einer Raumrichtung x und parallel zu einer Längsrichtung 3 des noch geraden Profils 1 verläuft, zwischen Biegerollen 4a-d und 5a-d eines ersten Biegerollensatzes 4 und eines zweiten Biegerollensatzes 5 eingeschoben. Zwischen den Biegerollen 4a, 4b, 4c und 4d des ersten Biegerollensatzes 4 ist ein Durchgang 4e ausgebildet, während zwischen den Biegerollen 5a, 5b, 5c und 5d des zweiten Biegerollensatzes 5 ein Durchgang 5e ausgebildet ist. Auf die Gestaltung der Biegerollen 4a-d, 5a-d und der Durchgänge 4e und 5e wird nachfolgend bezugnehmend auf Fig. 3 noch näher eingegangen werden. Das Profil 1 wird während des Einschiebens entlang der Einschieberichtung 2 in den hierzu geeignet geformten Durchgängen 4e und 5e geführt.

Der oberste Teil der Fig. 1 zeigt den ersten Biegerollensatz 4 und den zweiten Biegerollensatz 5 relativ zueinander in einer Lage, in der das Profil 1, ohne gebogen zu werden, geradlinig durch die Durchgänge 4e und 5e hindurchtritt. Rollendrehachsen 6a, 6b, 6c und 6d der Biegerollen 4a-4d sowie Rollendrehachsen 7a, 7b, 7c und 7d der Biegerollen 5a-d liegen jeweils in einer Ebene 6e bzw. 7e. Im obersten Teil der Fig. 1 erscheinen die Ebenen 6e und 7e projizierend, und verlaufen im Wesentlichen parallel zueinander.

Um das Profil 1 einem Rollbiegen zu unterziehen, erfolgt im mittleren Teilbild der Fig. 1 eine Translationsbewegung des zweiten Biegerollensatzes 5 relativ zu dem im Raum fixierten ersten Biegerollensatz 4 längs einer ersten Raumrichtung 11, welche in Fig. 1 der Raumrichtung z entspricht. Zudem rotiert in dem mittleren Teilbild der Fig. 1 der zweite Biegerollensatz 5 um eine in dem mittleren Teilbild projizierend dargestellte erste Rotationsachse 12. Die Translation längs der ersten Raumrichtung 11 ist mit dem Bezugszeichen T1, die Rotation um die erste Rotationsachse 12 mit dem Bezugszeichen R1 bezeichnet. Im mittleren Teilbild der Fig. 1 sind die beiden Ebenen 6e und 7e nicht mehr parallel, sind jedoch nach wie vor projizierend gezeigt. Durch die kombinierten Translations- und Rotationsbewegungen T1 und R1 des zweiten Biegerollensatzes 5 bezüglich des ersten Biegerollensatzes 4 wird das Profil 1, während es, eingeschoben in Einschieberichtung 2, den ersten Biegerollensatz 4 und den zweiten Biegerollensatz 5 durchläuft, um eine erste Biegeachse (oder Hauptbiegeachse) 13, die in Fig. 1 ebenfalls im mittleren Teilbild projizierend dargestellt ist und durch den Mittelpunkt eines an eine geeignete Mittenlinie des Profils angelegten Krümmungskreises verläuft, gebogen. Die erste Biegeachse 13 verläuft somit parallel zu der Raumrichtung y.

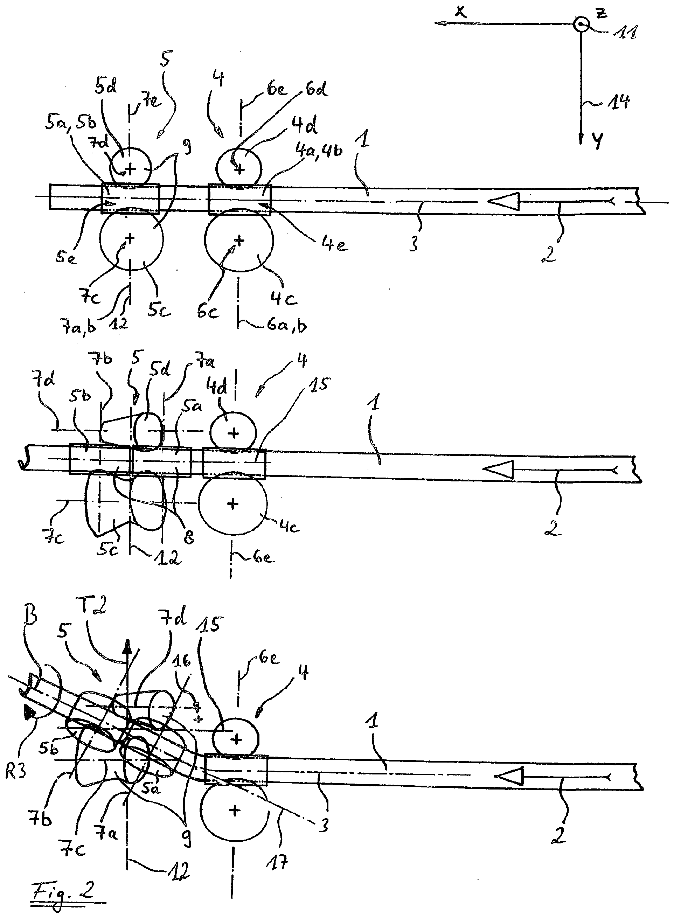

Im unteren Teilbild der Fig. 1 ist ein weiteres Stadium des Rollbiegens gemäß einem Ausführungsbeispiel des erfindungsgemäßen Rollbiegeverfahrens dargestellt. Das untere Teilbild der Fig. 1 illustriert ein Translahieren des zweiten Biegerollensatzes 5 bezüglich des ersten Biegerollensatzes 4 entlang einer zweiten Raumrichtung 14, welche in Fig. 1 der Raumrichtung y entspricht. Diese zweite Translation ist in Fig. 1 nicht bezeichnet, jedoch aus Fig. 2 ersichtlich und dort mit dem Bezugszeichen T2 bezeichnet. Sie erfolgt in negativer y-Richtung. Zudem rotiert im unteren Teilbild der Fig. 1 der zweite Biegerollensatz 5 um eine zweite Rotationsachse 15, welche in jener Ebene 7e liegt, in der auch die Rollendrehachsen 7a-7d zu liegen kommen. Im unteren Teilbild der Fig. 1 ist die Ebene 7e nicht mehr projizierend gezeigt. Die Rotation um die zweite Rotationsachse 15 ist mit dem Bezugszeichen R2 bezeichnet. Durch die Rotation R2 des zweiten Biegerollensatzes 5 in Bezug auf den ersten Biegerollensatz 4 wird das Profil 1 um eine parallel zu der Raumrichtung z verlaufende zweite Biegeachse 16 gebogen (siehe das untere Teilbild der Fig. 2).

Bei dem Ausführungsbeispiel des erfindungsgemäßen Verfahrens, wie es in Fig. 1 und Fig. 2 dargestellt ist, verlaufen die ersten und zweiten Raumrichtungen 11 und 14 somit im Wesentlichen senkrecht zu der Einschieberichtung 2 des Profils 1. Die beiden Raumrichtungen 11 und 14 stehen darüber hinaus im Wesentlichen senkrecht zueinander. Während die erste Rotationsachse 12 im Wesentlichen senkrecht zu der ersten Raumrichtung 11 und im Wesentlichen parallel zu der Richtung y verläuft, ist die zu der ersten Rotationsachse 12 nichtparallele zweite Rotationsachse 15 in den in den Figuren 1 und 2 gezeigten Stadien des Rollbiegens im Wesentlichen senkrecht zu der zweiten Raumrichtung 14 ausgerichtet. Die Richtungen x, y, z bilden ein rechtwinkliges Koordinatensystem.

Die Fig. 2 illustriert die drei in Fig. 1 gezeigten Stadien des Rollbiegens nochmals in der Draufsicht (entlang negativer z-Richtung betrachtet). Aus dem untersten Teilbild der Fig. 2 ist die dort wiederum projizierend verlaufende zweite Biegeachse 16 ersichtlich.

Hinsichtlich des Verfahrens zum Rollbiegen, wie es in den Fig. 1 und 2 dargestellt und vorstehend beschrieben wurde, ist zu bemerken, dass die Rotationen R1, T1, R2 und T2 nicht zwangsläufig in der abgebildeten Reihenfolge ausgeführt werden müssen. Je nach der gewünschten gebogenen Form des Profils 1, mit anderen Worten, je nach der gewünschten Bahnkurve B, der die Längsrichtung 3 des Profils 1 nach dem Biegen folgen soll, können die Rotationen und Translationen R1, R2, T1, T2 in einer geeigneten, vorbestimmt gewählten Folge zeitlich versetzt, zeitweise überlappend oder auch vollständig simultan erfolgen.

Erfindungsgemäß wird die Rotation R1 um die erste Rotationsachse 12 simultan mit der Translation T1 längs der ersten Raumrichtung 11 ausgeführt, um den zweiten Biegerollensatz 5 derart auszurichten, dass das Profil 1 in den Durchgang 5e im Wesentlichen senkrecht zu der Ebene 7e einläuft, um die Profiloberfläche zu schonen und die zur Biegung erforderlichen Kräfte möglichst normal zur Profiloberfläche einzuleiten.

Die Biegerollen 4a-d und 5a-d der Fig. 1 und 2 führen den Querschnitt des Profils 1 allseitig und sind hierzu um den jeweiligen Durchgang 4e, 5e derart angeordnet, dass Rollendrehachsen 6a-d, 7a-d der Biegerollen 4a-d, 5a-d jeweils paarweise parallel zueinander verlaufen. Im einzelnen verlaufen die Rollendrehachsen 7a, 7b der Biegerollen 5a, 5b parallel zueinander und im oberen Teilbild der Figur 1 parallel zur Richtung y, während die Rollendrehachsen 7c, 7d der Biegerollen 5c, 5d parallel zueinander und im oberen Teilbild der Figur 1 parallel zu der Richtung z verlaufen.

In ähnlicher Weise verlaufen die Rollendrehachsen 6a, 6b der Biegerollen 4a, 4b parallel zueinander und parallel zu der Richtung y, während die Rollendrehachsen 6c, 6d der Biegerollen 4c, 4d parallel zueinander und parallel zu der Richtung z ausgerichtet sind.

Die Biegerollen 5a, 5b bilden ein Paar 8, und die Biegerollen 5c, 5d bilden ein Paar 9. Die zweite Rotationsachse 15 wird bei dem Verfahren des Ausführungsbeispiels der Fig. 1 und 2 stets derart ausgerichtet, dass sie parallel zu den Rollendrehachsen 7c, 7d des Paars 9 verläuft.

Bevorzugt wird auch die Rotation R2 um die zweite Rotationsachse 15 simultan mit der Translation T2 längs der zweiten Raumrichtung 14 ausgeführt, um auch beim Biegen des Profils 1 um die zweite Biegeachse 16 (oder Nebenbiegeachse) die Ebene 7e an jenem Punkt, an dem das Profil 1 durch den Durchgang 5e hindurchtritt, möglichst senkrecht zur Längsrichtung 3 des Profils 1, die der Bahnkurve B folgt, ausrichten zu können.

Vorzugsweise wird der zweite Biegerollensatz 5 mittels geeigneter, in den Figuren 1 und 2 nicht gezeigter Stelleinrichtungen, die bevorzugt programmgesteuert (zum Beispiel CNC-gesteuert) arbeiten, bewegt. Darüber hinaus sind die Darstellungen der Fig. 1 und 2, insbesondere was die Größenverhältnisse und Konturen der Biegerollen 4a-d und 5a-d anbetrifft, nur schematisch zu verstehen. Eine beispielhafte Möglichkeit, die Biegerollen 4a-d bzw. 5a-d in Übereinstimmung mit einem Ausführungsbeispiel der Erfindung auszugestalten, wird nachstehend in Bezug auf die Fig. 3 noch näher erläutert werden.

Zusätzlich zu den in Fig. 1 und Fig. 2 gezeigten Rotationen R1, R2 kann der zweite Biegerollensatz 5 bezüglich des ersten Biegerollensatzes 4, entweder zeitgleich zu den beiden Rotationen R1, R2 und den Translationen T1, T2 oder zeitlich versetzt zu diesen oder auch mit diesen zeitlich überlappend noch um eine dritte Rotationsachse 17 rotiert werden. Diese Rotation ist mit dem Bezugszeichen R3 bezeichnet. Die in den Figuren 1 und 2 gezeigten Lagen der Biegerollen 5a-d spiegeln jedoch die Rotation R3 nicht wider. Wie aus den untersten Teilbildern der Fig. 1 und 2 ersichtlich ist, verläuft die dritte Rotationsachse 17 in einem Bereich des Profils 1, der in dem Durchgang 5e des zweiten Biegerollensatzes 5 aufgenommen ist, im Wesentlichen tangential zu der Bahnkurve B des Profils 1. Hierbei ist die dritte Rotationsachse 17 in einer Richtung im Wesentlichen senkrecht zu der Ebene 7e ausgerichtet. Beispielsweise kann die dritte Rotationsachse 17 in dem in dem Durchgang 5e des zweiten Biegerollensatzes 5 aufgenommenen Bereich des Profils 1 die Bahnkurve B desselben berühren und durch einen geeignet gewählten Punkt, beispielsweise einen geeignet definierten Mittelpunkt, des Profilquerschnitts in der Ebene 7e hindurchtreten. In diesem Mittelpunkt können sich auch die beiden Rotationsachsen 12 und 15 schneiden. Durch die dritte Rotation R3 des zweiten Biegerollensatzes 5 bezüglich des ersten Biegerollensatzes 4 kann das zu biegende Profil zusätzlich zu der Biegung um die erste Biegeachse 13 und um die zweite Biegeachse 16 zumindest bereichsweise mit einem Drall versehen werden. Dies bedeutet, dass beispielsweise ein Drallwinkel über einen oder mehrere Teile der Längserstreckung des Profils 1 verschwinden kann, während er in anderen Abschnitten des Profils 1 in der gewünschten Weise von Null verschieden ist, oder kontinuierlich zwischen einem vorbestimmten Wert und dem Wert Null variiert.

Bei dem Ausführungsbeispiel der Figuren 1 und 2 werden die Biegerollen 4a-d und die Biegerollen 5a-d nicht mittels eines elektrischen oder sonstigen Antriebs drehend angetrieben, sondern sind frei drehbar. Die Biegerollen 4a-d, 5a-d werden somit jeweils durch die Bewegung des Profils 1 beim Einschieben desselben entlang der Einschieberichtung 2 über den Oberflächenkontakt mit den Biegerollen 4a-d, 5a-d in Drehung um ihre jeweiligen Rollendrehachsen 6a-d und 7a-d versetzt. Hierbei sollten die Biegerollen 4a-d, 5a-d möglichst schlupffrei auf der Profiloberfläche abrollen.

Im Folgenden sollen die ersten und zweiten Biegerollensätze 4 und 5 näher beschrieben werden, wie sie zur Durchführung des Verfahrens der Figuren 1 und 2 ausgestaltet sein können. Die Ausgestaltung und Anordnung der Biegerollen 4a-d, 5a-d des ersten Biegerollensatzes 4 und des zweiten Biegerollensatzes 5 können in im Wesentlichen gleicher Weise ausgeführt werden.

Fig. 3 stellt eine Vorderansicht eines der Biegerollensätze 4 oder 5 dar, also eine Ansicht im Wesentlichen senkrecht zu der Ebene 6e oder 7e, in der die Rollendrehachsen 6a-6d bzw. 7a-7d liegen.

In der in den obersten Teilbildern der Fig. 1 und 2 gezeigten Neutrallage der beiden Biegerollensätze 4, 5 zueinander sind die Rollendrehachsen 6a, 7a sowie 6b, 7b im Wesentlichen parallel zu der Richtung y ausgerichtet. Die Rollendrehachsen 6c und 6d der Biegerollen 4c und 4d des ersten Biegerollensatzes 4 und die Rollendrehachsen 7c und 7d der beiden Biegerollen 5c und 5d des zweiten Biegerollensatzes 5 sind im Wesentlichen parallel zu der Richtung z ausgerichtet. Wie die Fig. 3 zeigt, liegen die Rollendrehachsen der Biegerollen 4a-d, 5a-d eines der Biegerollensätze 4, 5 jeweils in einer Ebene 6e oder 7e, und sind in der Weise voneinander beabstandet, dass zwischen den Rollen ein Durchgang 4e, 5e zum Führen des Profils 1 ausgebildet ist.

In der Fig. 3 ist auch das Profil 1 in seinem Querschnitt dargestellt. In diesem Querschnitt ist erkennbar, dass das Profil 1 in dem in Fig. 3 beispielhaft gezeigten Fall eine aus zwei Metallprofilen 21a, 21b zusammengesetzte Armierung 21 aufweist, wobei die Armierung 21 mittels eines Extrusionsverfahrens in zwei unterschiedliche Kunststoffmaterialien eingebettet wurde. Das Profil 1 weist hierbei in einem ersten Querschnittsbereich 22a - in Fig. 3 dunkler und kreuzweise schraffiert dargestellt - ein erstes Kunststoffmaterial auf, das um einen Teilbereich der Armierung 21 herumextrudiert wurde. In einem zweiten Querschnittsbereich 22b ist ein zweites Kunststoffmaterial um einen zweiten Teilbereich der Armierung 21 durch Extrusion herumgeformt. Die Metallprofile 21a, 21b sind zum Beispiel aus Stahl gefertigt.

Die jeweilige Kontur der Mantelflächen der einzelnen Biegerollen 4a-d, 5a-d ist derart gewählt, dass die Biegerollen 4a-d, 5a-d es gestatten, das im Querschnitt unregelmäßig geformte, bei dem gezeigten Beispiel nach unten rinnenartig offene, Profil 1 in dem Zwischenraum 4e, 5e aufzunehmen und zu führen. Wie die Fig. 3 zeigt, rollen die Biegerollen 4a-d, 5a-d hierzu auf einem großen Teil der Profiloberfläche ab, sowohl auf einer Außenseite 23 als auch auf einer Innenseite 24 des Profils 1.

Fig. 3 illustriert weiterhin, dass die Biegerollen 4a-d des ersten Biegerollensatzes 4 in einem Rahmen 25 in nicht im Detail dargestellter Weise um ihre Rollendrehachsen 6a-d frei drehbar gelagert sind. In gleicher Weise sind die Biegerollen 5a-d des zweiten Biegerollensatzes 5 in einem Rahmen 26 frei drehbar gelagert. Wie in den Figuren 1 und 2 verdeutlicht, kann der Rahmen 25 für den ersten Biegerollensatz 4 im Raum in einer fixierten Position verbleiben, während der Rahmen 26, der den zweiten Biegerollensatz 5 trägt, im Raum in geeigneter Weise, wie zu den Figuren 1 und 2 beschrieben wurde, bezüglich des Rahmens 25 bewegt wird. Die Figur 3 illustriert die Rahmen 25 und 26 nur schematisch.

Zusätzlich wäre es vorteilhaft, wenn in dem Bereich 10 zwischen den Schenkeln des Profils 1 ein Füllstück (in Figur 3 der besseren Übersichtlichkeit halber nicht dargestellt) eingesetzt ist. Dieser Bereich 10 ist definiert als Innenbereich zwischen den nach innen gebogenen Schenkeln des Profils 1. Das Füllstück hat in diesem Fall die Funktion einer besseren Abstützung des Profils 1, was aus Stabilitätsgründen besonders vorteilhaft ist. Als Material für das Füllstück wird vorzugweise ein harter Werkstoff verwendet. Besonders bevorzugt ist es, wenn als Füllstück ein harter Kunststoff, wie etwa PEEK (Polyetheretherketon), verwendet wird.

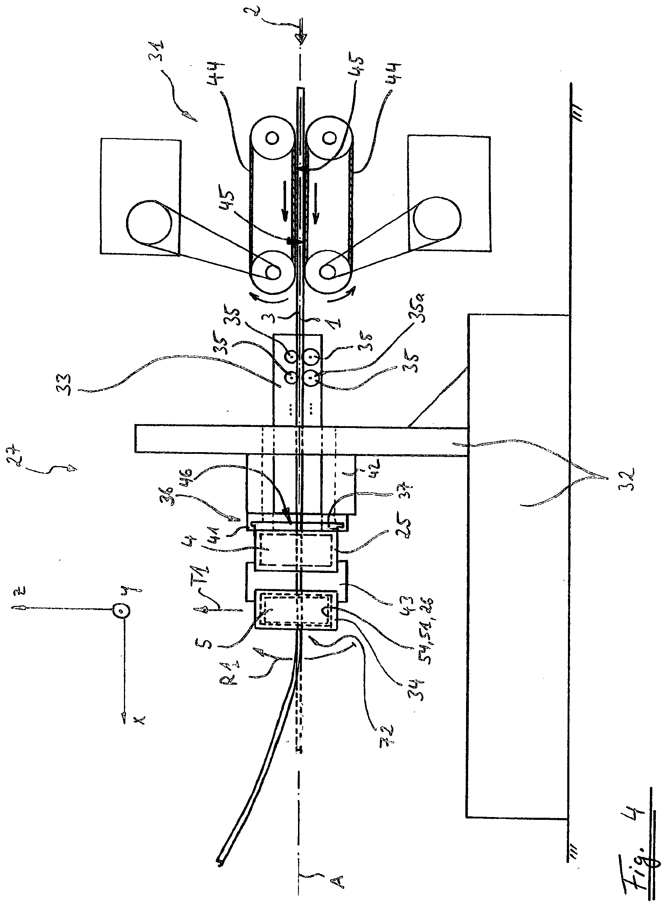

In Fig. 4 sind in einer Seitenansicht eine Vorrichtung 27 zum Rollbiegen eines Profils 1 gemäß einem Ausführungsbeispiel der Erfindung, sowie eine Abzugsbandanordnung 31 gezeigt. Die Vorrichtung 27 dient der Durchführung des zu den Figuren 1 und 2 beispielhaft erläuterten Verfahrens und weist eine feststehende, im Wesentlichen starre Unterkonstruktion 32 auf, an der eine Einlaufführung 33, ein Rahmen 25, der einen ersten Biegerollensatz 4 trägt, und ein Biegekopf 34, der einen Rahmen 26 mit einem zweiten Biegerollensatz 5 trägt, angeordnet. In Fig. 4 sind die Biegerollensätze 4 und 5 nicht im Detail gezeigt, sind aber bevorzugt ausgestaltet, wie zu den Fig. 1-3 vorstehend beschrieben.

Die Einlaufführung 33 ist mit mehreren Paaren von Führungsrollen 35 versehen und an der Unterkonstruktion 32 befestigt. Es können beispielsweise etwa fünf bis zehn Paare von Führungsrollen 35 vorgesehen sein, die gleichmäßig voneinander beabstandet an einem nicht näher bezeichneten Grundkörper der Einlaufführung 33 frei drehbar gelagert sind. Die Führungsrollen 35 können hierbei ebenfalls im Bereich ihrer Mantelfläche zur Führung des Profils 1 geeignet konturiert sein. In gleicher Weise wie die Biegerollen 4a-d, 5a-d werden die Führungsrollen 35 nicht von einem elektromotorischen oder sonstigen Antrieb zum Transportieren des Profils 1 angetrieben.

Auch der Rahmen 25, der den ersten Biegerollensatz 4 trägt, ist an der Unterkonstruktion 32 befestigt. Vorteilhaft ist der Rahmen 25 mit dem ersten Biegerollensatz 4 mit der Einlaufführung 33 in definierter Orientierung zu dieser fest verbunden. Der Rahmen 25, dessen geometrische Ausgestaltung nicht notwendig der in Fig. 3 nur schematisch gezeigten entsprechen muss, sondern je nach den Erfordernissen auch geometrisch anders ausgeführt werden kann, ist mittels einer Verstelleinrichtung 36 derart mit der Unterkonstruktion 32 gekoppelt, dass der Rahmen 25 gemeinsam mit der Einlaufführung 33 um eine Achse A, welche im Bereich der Einlaufführung mit einer Längsrichtung 3 des Profils 1 im Wesentlichen übereinstimmt, verdreht werden kann. Die Verdrehung um die Achse A führt zu einer Verdrehung des Koordinatensystems x, y, z um die Richtung x. Auf diese Weise kann die räumliche Ausrichtung des Biegerollensatzes 4 und der Führungsrollen 35 der Einlaufführung 33 bezüglich der Orientierung des in Einschieberichtung 2 in die Einlaufführung 33 eingeschobenen Profils 1 ausgerichtet werden. Die Drehbarkeit um die Achse A wird bei dem in Fig. 4 gezeigten Ausführungsbeispiel dadurch erreicht, dass der Rahmen 25, der mit dem Grundkörper der Einlaufführung 33 beispielsweise fest verschraubt ist, mit einem Flansch 37 versehen ist, der entlang seiner Umfangsrichtung gerundet ausgebildet ist und von Vorsprüngen 41 eines Stützbauteils 42, durch welches die Einlaufführung 33 hindurchgeführt ist, hintergriffen wird. Die Ausrichtung der Einlaufführung 33 und des Raumes 25 gegenüber dem Stützbauteil 42 wird bei dem Ausführungsbeispiel der Fig. 4 durch Klemmen des Flansches 37 gegen die Vorsprünge 41 mittels einer oder mehrerer Schrauben fixiert.

Der Biegekopf 34 ist mit dem Rahmen 25 mittels einer Verbindungseinrichtung 43 in der Weise verbunden, dass der Biegekopf 34 die zu den Figuren 1 und 2 beschriebene Translation T1 und die ebenfalls in Bezug auf diese Figuren erläuterte Rotation R1 ausführen kann. Die Verbindungseinrichtung 43 legt somit die Beweglichkeit des Biegekopfs 34 bezüglich des Rahmens 25 fest. Zum Biegen des Profils 1 erforderliche Kräfte, die benötigt werden, um die Rotation R1 und die Translation T1 auszuführen, werden mittels einer oder mehrerer, in Fig. 4 nicht gezeigter Stelleinrichtungen, beispielsweise elektrischer Motoren, oder pneumatischer oder hydraulischer Zylinder, aufgebracht.

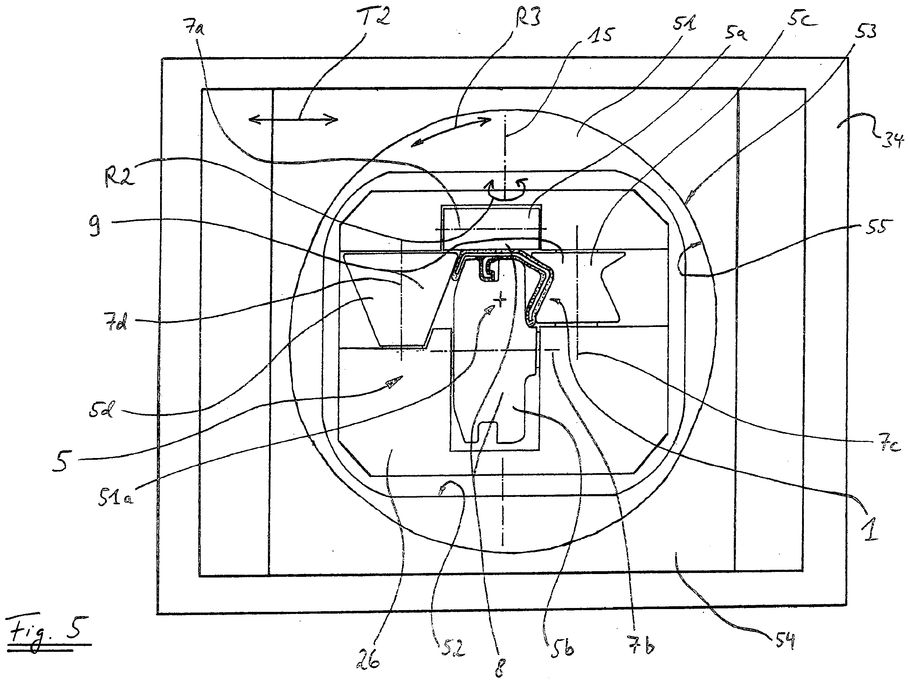

Der zweite Biegerollensatz 5 selbst ist seinerseits von dem Rahmen 26 getragen, der bezüglich des Biegekopfes 34 bewegbar ist. Aufgrund der Bewegbarkeit des Rahmens 26 kann der zweite Biegerollensatz 5 die unter Bezugnahme auf die Figuren 1 und 2 erläuterten Rotationen R2 und R3 sowie die Translation T2 ausführen. Der Rahmen 26 ist hierzu mit dem Biegekopf 34 in geeigneter Weise gekoppelt, wie nachfolgend zu Fig. 5 noch näher erläutert werden wird.

Zum Biegen eines Profils, beispielsweise des in Fig. 3 dargestellten Profils 1, wird das Profil 1 längs der Einschieberichtung 2 in die Einlaufführung 33 eingeschoben. Dieses Einschieben erfolgt bei dem Ausführungsbeispiel der Fig. 4 mittels der Abzugsbandanordnung 31, die zwei endlose Bänder 44 aufweist, von denen eines oberhalb und eines unterhalb des Profils 1 angeordnet ist. Die Bänder 44 verlaufen, wie Fig. 4 zeigt, abschnittsweise parallel zueinander und zur Einschieberichtung 2, die im Bereich der Abzugsbandanordnung 31 der Längsrichtung 3 des Profils 1 entspricht. Dem Profil 1 zugewandte Oberflächen 45 der Bänder 44 sind hinreichend nachgiebig ausgebildet, um das zwischen den Bändern 44 transportierte Profil 1 vor Oberflächenschäden zu bewahren und zugleich ein wirksames, schlupffreies Einschieben des Profils 1 in die Vorrichtung 27 zu gewährleisten. Anstelle der Bänder 44 können auch entsprechend ausgebildete Raupenketten eingesetzt werden.

Das aus der Abzugsbandanordnung 31 austretende Profil 1 läuft sodann zwischen den Führungsrollen 35 der Einlaufführung 33 hindurch, welche das Profil 1 führt und insbesondere verhindert, dass das Profil 1 unter der zum Einschieben aufgeprägten Kraft seitlich oder nach oben oder unten ausknickt. Durch die Einschiebebewegung des Profils 1 werden die frei drehbaren Führungsrollen 35 in Drehung um ihre Rollendrehachsen 35a versetzt.

An einem ausgangsseitigen Ende 46 der Einlaufführung 33 tritt das Profil 1 in den Durchgang 4e des ersten Biegerollensatzes 4 ein. Das Profil 1 durchläuft den ersten Biegerollensatz 4 und den zweiten Biegerollensatz 5. Sobald das Profil 1 von beiden Biegerollensätzen 4, 5 geführt ist, kann der zweite Biegerollensatz 5, bevorzugt mittels eines vorbestimmten Programms angesteuert, die Rotation R1 und die Translation T1, wie zu den Figuren 1 und 2 beschrieben, ausführen, während der Rahmen 26, ebenfalls bevorzugt programmgesteuert, bezüglich des Biegekopfes 34 bewegt wird und die Rotationen R2 und R3 sowie die Translation T2 ausführt. Auf diese Weise wird das Profil 1 von seiner geraden Form (in Fig. 4 gestrichelt angedeutet) in eine frei dreidimensional gebogene Form überführt.

Fig. 5 zeigt, wie bei dem Ausführungsbeispiel der Fig. 4 der Rahmen 26, der die Biegerollen 5a-b des zweiten Biegerollensatzes 5 trägt, mit dem in Fig. 5 nur schematisch angedeuteten Biegekopf 34 derart gekoppelt werden kann, dass der zweite Biegerollensatz 5 die Rotationen R2 und R3 sowie die Translation T2 ausführen kann. Der Rahmen 26 ist in etwa ausgebildet wie der in Fig. 3 dargestellte Rahmen 26, und die Biegerollen 5a-d sind ebenfalls in dem Rahmen 26 gelagert, wie zu Fig. 3 beschrieben. Der Rahmen 26 seinerseits ist um die bereits in den Figuren 1 und 2 aufgezeigte zweite Rotationsachse 15 drehbar an einer Hülse 51 gelagert, wobei die zweite Rotationsachse 15 in der Ebene 7e, in der auch die Rollendrehachsen 7a-d der Biegerollen 5a-d liegen, liegt und zu den Rollendrehachsen 7c, 7d stets parallel verläuft. Die Hülse 51 weist eine durchgehende Öffnung 52 auf, in der der Rahmen 26 mit allseits hinreichend Spielraum aufgenommen ist. Ferner weist die Hülse 51 eine im Wesentlichen kreiszylindrische Außenumfangsfläche 53 auf, die der Lagerung der Hülse 51 in einer korrespondierenden, kreisrunden Ausnehmung 55 eines verschiebbaren Schlittens 54 dient. Die Verschiebbarkeit des Schlittens 54 ermöglicht die Translationsbewegung T2 des zweiten Biegerollensatzes 5. Hingegen ermöglicht die Drehbarkeit der Hülse 51 um eine Mittelachse 51a der Außenumfangsfläche 53 die Rotation R3 des zweiten Biegerollensatzes 5, und die rotatorische Verschwenkbarkeit des Rahmens 26 um die zweite Rotationsachse 15 ermöglicht die Rotationsbewegung R2.

Um das Profil 1 mittels der Rotationen R2, R3 und der Translation T2 biegen zu können, müssen mittels des zweiten Biegerollensatzes 5 Kräfte und gegebenenfalls Drehmomente auf das Profil 1 aufgebracht werden. Dies erfolgt bevorzugt mit Hilfe von in Fig. 5 nicht gezeigten Stelleinrichtungen, welche es ermöglichen, den Schlitten 54 gegenüber dem Biegekopf 34 zu verschieben, die Hülse 51 in der Ausnehmung 55 zu verdrehen und den Rahmen 26 gegenüber der Hülse 51 um die zweite Rotationsachse 15 zu verschwenken. Bei diesen Stelleinrichtungen kann es sich beispielsweise um elektrische Motoren, aber auch um pneumatische oder hydraulische Zylinder handeln, welche jeweils in geeigneter Weise mit den vorgenannten Bauteilen gekoppelt sind.

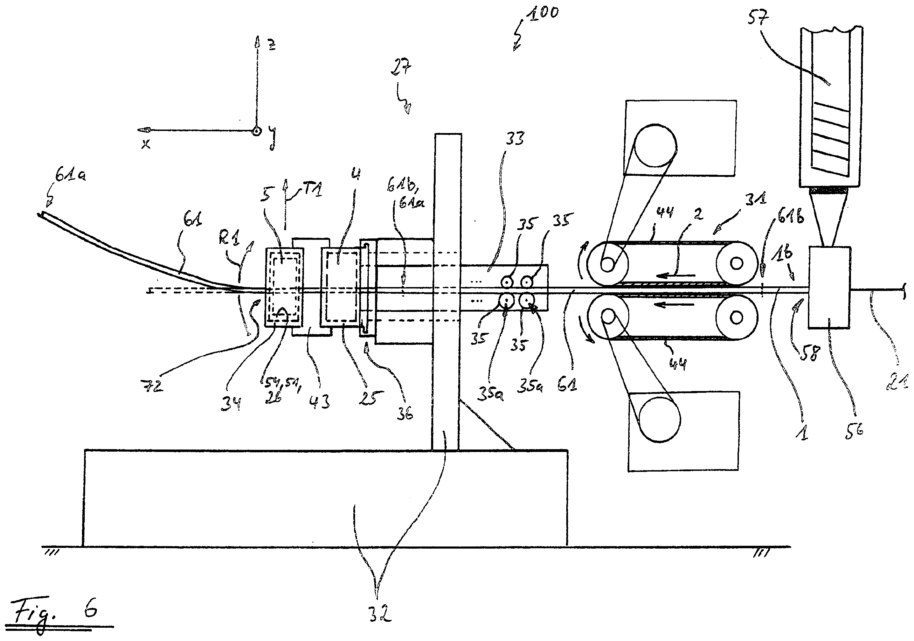

In Fig. 6 ist eine Vorrichtung 27 zum Rollbiegen eines Profils 1, eine Abzugsbandanordnung 31 sowie ein Extrusionswerkzeug 56 mit einem an dieses angeschlossenen Extruder 57 in einer Seitenansicht schematisch dargestellt. Die Orientierung des Extruders 57 bezüglich des Extrusionswerkzeugs 56 ist nur schematisch und beispielhaft gezeigt, der Extruder 57 kann bezüglich des Extrusionswerkzeugs 56 in jeder für ein Extrudieren des Profils 1 geeigneten Weise angeordnet werden.

Die Vorrichtung 27, die Abzugsbandanordnung 31 und das Extrusionswerkzeug 56 mit dem Extruder 57 stellen Bestandteile einer Extrusions- und Rollbiegelinie 100 dar. Mittels der Extrusions- und Rollbiegelinie 100 können aus dem Profil 1 gebogene Profilwerkstücke 1a hergestellt werden.

Zur Herstellung des Profils 1 wird eine Armierung 21, gebildet aus beispielsweise einem oder mehreren Metallprofilen 21a, 21b, in das Extrusionswerkzeug 56 kontinuierlich eingeführt und in dem Extrusionswerkzeug 56 von einem in dem Extruder 57 aufgeschmolzenen Kunststoffmaterial umgeben, wodurch die Armierung 21 in das Kunststoffmaterial eingebettet wird und beispielsweise das Profil 1 mit einem Querschnitt, wie er in Fig. 3 gezeigt ist, erzeugt wird. Nach dem Austritt des Profils 1 aus dem Extrusionswerkzeug 56 auf einer Austrittsseite 58 desselben kühlt das Kunststoffmaterial ab und verfestigt sich. Nach einer in Fig. 6 verkürzt gezeigten Laufstrecke wird das Profil 1, wie bereits zu Fig. 4 beschrieben, mittels der Abzugsbandanordnung 31 transportiert und in eine Einlaufführung 33 der Vorrichtung 27 eingeschoben. Die Vorrichtung 27 ist im Wesentlichen ausgebildet wie jene des Ausführungsbeispiels der Fig. 4 und ermöglicht ein Rollbiegen des Profils 1 gemäß den Fig. 1 und 2.

Bei dem Ausführungsbeispiel, wie es in Fig. 4 dargestellt ist, können auch bereits abgelängte, gerade Profilstücke mittels der Abzugsbandanordnung 31 in die Vorrichtung 27 zum Rollbiegen des Profils 1 eingeschoben werden. Noch vorteilhafter ist allerdings die Extrusions- und Rollbiegelinie 100 gemäß dem Ausführungsbeispiel der Fig. 6. Hierbei wird das Rollbiegen des Profils 1 als ein so genanntes 3D-Inline-Rollbiegen durchgeführt. Dies bedeutet, dass innerhalb einer einzigen Fer-45 tigungslinie die Herstellung des Profils 1 als geradliniger, kontinuierlicher Strang 1b und daran anschließend das Rollbiegen aufeinanderfolgender Abschnitte dieses Strangs 1b mittels der Vorrichtung 27 erfolgen kann. Beispielsweise können die aufeinanderfolgenden Abschnitte in jeweils gleicher Weise mit Hilfe eines vordefinierten Steuerprogramms freiformgebogen werden. In Fig. 6 ist ein derartiger Abschnitt des Profils 1 mit dem Bezugszeichen 61, seine Enden mit den Bezugszeichen 61a und 61b bezeichnet. Das Rollbiegen aufeinanderfolgender Abschnitte 61 des Profils 1 gelingt mitder Extrusions- und Rollbiegelinie 100 der Fig. 6 somit auf besonders wirtschaftliche Weise, da das Profil nicht zuerst als geradliniger, kontinuierlicher Strang extrudiert, geradlinige Stücke sodann abgelängt und die abgelängten Stücke sodann in eine separate Biegevorrichtung eingeführt werden müssen. Auf diese Weise wird Arbeitszeit und Stellfläche gespart. Ferner werden auch Materialverluste verringert, die sich beim fortgesetzten Ablängen vom kontinuierlichen Strang und erst nachfolgendem Biegen ergeben können.

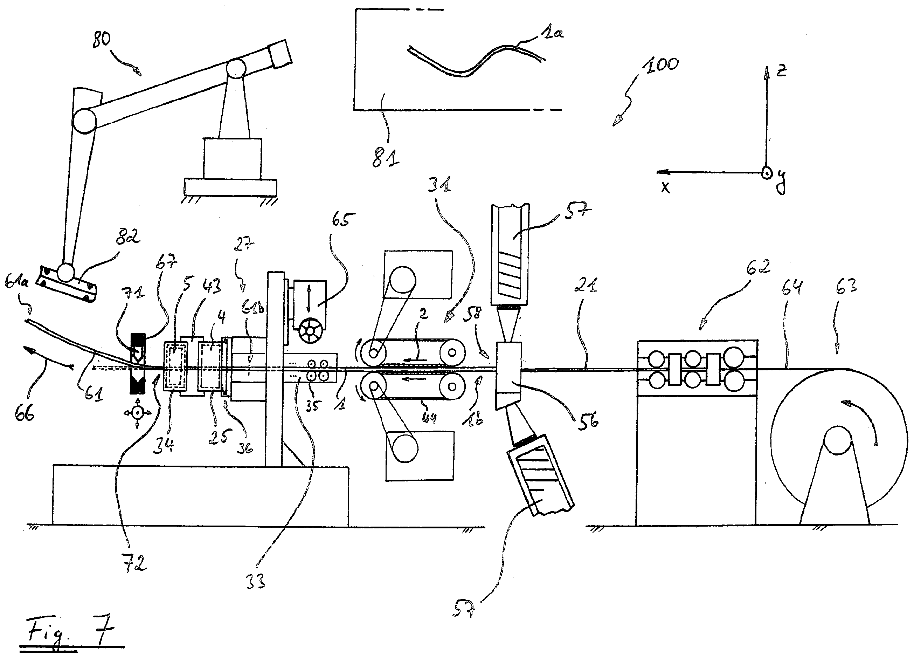

Eine Extrusions- und Rollbiegelinie 100 gemäß einem weiteren Ausführungsbeispiel der Erfindung ist in der Fig. 7 illustriert. Wie dies zu Fig. 6 beschrieben wurde, ist wiederum eine Vorrichtung 27 zum Rollbiegen eines Profils 1 vorgesehen. Ferner weist die Extrusions- und Rollbiegelinie 100 der Fig. 7 eine Abzugsbandanordnung 31 und ein Extrusionswerkzeug 56 auf, welches im Falle der Fig. 7 nunmehr von zwei Extrudern 57 gespeist wird, um das Profil 1 mit mehreren, aus unterschiedlichen Kunststoffmaterialien ausgebildeten Querschnittsbereichen auszubilden.

Die Extrusions- und Rollbiegelinie 100 der Fig. 7 weist zudem noch eine Umformeinrichtung 62 auf, die der Herstellung einer Armierung 21 innerhalb der Extrusions- und Rollbiegelinie dient. Von einer Vorratsrolle 63 wird ein flaches Metallband 64 abgerollt und durch die Umformeinrichtung 62, die in Fig. 7 nicht im Detail gezeigt ist, beispielsweise mittels einer Reihe von Rollen und/oder Walzen, in eine geeignete Querschnittsform gebracht und bildet dann ein Metallprofil, beispielsweise das Metallprofil 21b, wie es in Fig. 3 gezeigt ist. Es kann auch eine zweite, in Figur 7 nicht dargestellte Umformeinrichtung 62 vorgesehen sein, die ein zweites Metallprofil 21a erzeugt, welches dann vor dem Einführen in das Extrusionswerkzeug 56 an das Metallprofil 21b herangeführt und gegebenenfalls mit diesem verbunden werden kann.

Die auf diese Weise gebildete Armierung 21 tritt nun wiederum in das Extrusionswerkzeug 56 ein und wird dort in ein oder mehrere Kunststoffmaterialien eingebettet. Aus dem Extrusionswerkzeug 56 tritt das Profil als kontinuierlicher Strang 1b aus, der, wenn er hinreichend erkaltet ist, mittels der Abzugsbandanordnung 31 in die Einlaufführung 33 der Vorrichtung 27 eingeschoben wird. Das Rollbiegen aufeinanderfolgender Abschnitte 61 des Profils 1 wird, wie vorstehend zu Fig. 6 beschrieben, durchgeführt.

Die zu Fig. 5 beschriebene Kopplung des Rahmens 26 und des Biegekopfes 34 kommt bei dem Ausführungsbeispiel der Fig. 7 vorzugsweise zum Einsatz. Um eine präzise Ansteuerung von Stelleinrichtungen, die die für die Relativbewegung des zweiten Biegerollensatzes 5 bezüglich des ersten Biegerollensatzes 4 erforderlichen Kräfte bereitstellen, zu gewährleisten, ist bei der Extrusions- und Rollbiegelinie 100 der Fig. 7 eine Messeinrichtung 65 vorgesehen, mit der eine die Einlaufführung 33 durchlaufende Länge des Profils 1 ermittelt werden kann.

Durch das Einschieben des Profils 1 in die Vorrichtung 27 und das Bewegen des zweiten Biegerollensatzes 5 läuft ein freies Ende 61a eines Abschnitts 61 des Profils 1 beispielsweise in Richtung 66 auf einer Ausgangsseite 72 des zweiten Biegerollensatzes 5 aus diesem heraus. Hierbei wird sich der immer weiter aus dem zweiten Biegerollensatz 5 heraustretende Abschnitt 61 je nach gewählter Biegeform in den beiden Raumrichtungen y und z hin- und herbewegen. Um den Abschnitt 61, nachdem dieser den zweiten Biegerollensatz 5 bis zu seinem zweiten Ende 61b vollständig durchlaufen hat und somit fertig gebogen ist, von dem kontinuierlichen Strang 1b abtrennen zu können, ist auf der Ausgangsseite 72 eine im Raum bewegbare Trenneinrichtung 67 vorgesehen, die beispielsweise ein Messer 71 aufweist, welches zu einem geeigneten Zeitpunkt programmgesteuert den Abschnitt 61 zur Bildung des gebogenen Profilwerkstücks 1a abtrennt. Hierbei kann zum Beispiel die von der Messeinrichtung 65 ermittelte, durchgelaufene Länge berücksichtigt werden. Vorzugsweise ist die Trenneinrichtung 67 derart im Raum bewegbar, dass sie einerseits den Bewegungen des Abschnitts 61 während des Biegens in den Richtungen y und z nachgeführt werden kann, andererseits aber auch als mitlaufende Trenneinrichtung der Vorschubbewegung des Abschnitts 61 in Richtung 66 für einen sauberen Schnitt möglichst mit der Vorschub- oder Einschiebegeschwindigkeit des Profils 1 nachgeführt werden kann. Mithin ist die Trenneinrichtung 67 bevorzugt auch in x-Richtung verfahrbar. Auch die aktuelle Einschiebegeschwindigkeit kann mittels der Messeinrichtung 65 ermittelt werden. Während nach dem Abtrennen ein neues Ende 61a eines neuen Abschnitts 61 aus dem zweiten Biegerollensatz 5 heraustritt, wird die Trenneinrichtung 67 bevorzugt um die Strecke, die sie mit dem vorherigen Abschnitt 61 vor dem Schnitt mitgelaufen ist, auf der Ausgangsseite 72 in die Nähe des zweiten Biegerollensatzes 5 zurückverfahren. Kurz bevor der Abschnitt 61 von dem kontinuierlichen Strang 1b abgetrennt wird, wird der Abschnitt 61 bei dem Ausführungsbeispiel der Fig. 7 mittels einer Handhabungseinrichtung 80 gegriffen, um zu vermeiden, dass sich der Abschnitt 61 unter seinem eigenen Gewicht unerwünscht deformiert und um zu vermeiden, dass der Abschnitt 61 nach dem Abtrennen herunterfällt. Mit dem Abtrennen des Abschnitts 61 wird ein gebogenes Profilwerkstück 1a erzeugt, welches nach dem Abtrennen somit mittels der Handhabungseinrichtung 80 gehalten ist und von dieser für eine Weiterverarbeitung oder Lagerung weitertransportiert und/oder abgelegt wird. Beispielsweise kann das gebogene Profilwerkstück 1a auf einem Ablageplatz 81 abgelegt werden. Um den Abschnitt 61 richtig fassen zu können, ist die Handhabungseinrichtung 80, die als ein an sich bekannter, rechnergesteuerter, mehrachsiger Industrieroboter ausgebildet sein kann, bei dem gezeigten Ausführungsbeispiel mit einem geeigneten Greifwerkzeug 82 ausgestattet.

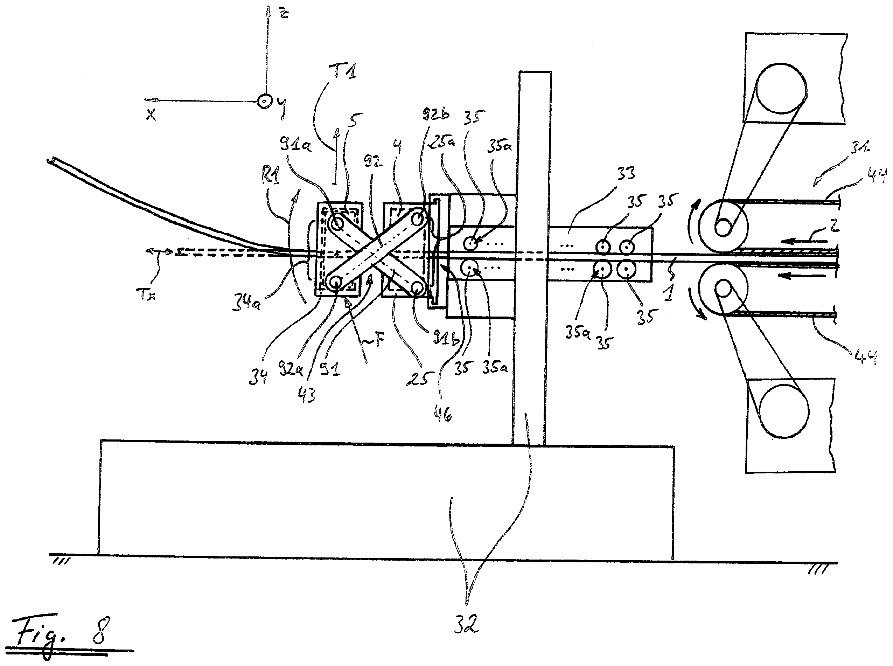

Fig. 8 zeigt ein weiteres Ausführungsbeispiel einer Vorrichtung 27 zum Rollbiegen eines Profils 1. Wiederum weist die Vorrichtung eine Unterkonstruktion 32, eine Einlaufführung 33 sowie einen Rahmen 25 und einen Biegekopf 34 auf. Gegenüber dem Ausführungsbeispiel der Fig. 4 sollen nunmehr nur die Unterschiede des Ausführungsbeispiels der Fig. 8 herausgestellt werden.

Wie in Fig. 8 gezeigt, ist bei der Vorrichtung 27 gemäß diesem Ausführungsbeispiel die Verbindungseinrichtung 43, welche den Biegekopf 34 mit dem Rahmen 25, der den ersten Biegerollensatz 4 trägt, verbindet, mit zwei einander kreuzenden Verbindungsbauteilen 91 und 92 ausgebildet. Die Verbindungsbauteile 91, 92 sind bei diesem Ausführungsbeispiel im Wesentlichen stabartig ausgeführt. Das erste Verbindungsbauteil 91 ist mit dem Biegekopf 34 über eine erste gelenkige Verbindung 91a und mit dem Rahmen 25 über eine zweite gelenkige Verbindung 91b verbunden. Das zweite Verbindungsbauteil 92 ist mit dem Biegekopf 34 über eine dritte gelenkige Verbindung 92a und mit dem Rahmen 25 über eine vierte gelenkige Verbindung 92b verbunden. Eine geradlinige Verbindungslinie der gelenkigen Verbindung 91a und der gelenkigen Verbindung 91b kreuzt eine geradlinige Verbindungslinie der gelenkigen Verbindung 92a und der gelenkigen Verbindung 92b. Die Verbindungsbauteile 91 und 92 können sich übereinander hinwegbewegen, wie in Fig. 8 angedeutet. Die gelenkigen Verbindungen 91a, 91b, 92a, 92b sind bevorzugt als einachsige Drehgelenke ausgebildet, deren Drehachsen parallel zueinander und parallel zur y-Richtung verlaufen.

Auf diese Weise bilden die Verbindungsbauteile 91 und 92, sowie ein Bereich 34a des Biegekopfes 34 und ein Bereich 25a des Rahmens 25 ein Viergelenk. Das Viergelenk koppelt den Biegekopf 34 und den Rahmen 25 in der Weise, dass der Biegekopf 34 bezüglich des Rahmens 25 eine kombinierte Rotations- und Translationsbewegung ausführen kann. Diese Bewegung beinhaltet die Translation T1 entlang der ersten Raumrichtung 11 (parallel zur Richtung z) und die zu der Translation T1 simultan ablaufende Rotation R1 um die erste Rotationsachse 12 (parallel zur Richtung y), wie zu den Figuren 1 und 2 beschrieben. Hierbei sind die Rotation R1 und die Translation T1 aneinander gekoppelt.

Darüber hinaus kommt es bei Auslenkung des Biegekopfs 34 aus der in der Fig. 8 gezeigten Neutrallage aufgrund der Kinematik des Viergelenks auch zu einer geringfügigen Translationsbewegung Tx des Biegekopfs 34 entlang der Richtung x, also normal zur Richtung der Translationsbewegung T1. Wird der Biegekopf 34 in positiver x-Richtung aus der Neutrallage ausgelenkt, so translahiert die Biegekopf 34 also zusätzlich ein wenig längs der negativen x-Richtung, während er, wie gezeigt im Uhrzeigersinn rotiert.

Durch die Verbindung des Biegekopfs 34 und des Rahmens 25 in der in Fig. 8 gezeigten Weise ist es ausreichend, den Biegekopf 34 für die Translation T1 und die Rotation R1 mittels einer einzigen Stelleinrichtung, die in Fig. 8 nicht gezeigt ist, zu betätigen, indem beispielsweise eine Kraft F auf den Biegekopf 34 aufgebracht wird. Die in Fig. 8 gezeigte Kopplung des Biegekopfes 34 und des Rahmens 25 kann bei den in den Figuren 4, 6 und 7 gezeigten Vorrichtungen 27 zum Einsatz kommen.

In Figur 8 sind in der Einlaufführung 33 jeweilige Führungsrollen 35a vorgesehen. Diese Führungsrollen 35a dienen dem Zweck, das Profil 1 beim Einführen in den Biegekopf 34 geeignet zu führen.

Statt der Verwendung von Führungsrollen 35 im vorderen Bereich der Einlaufführung 33 wäre auch jede andere Führungseinrichtung hierfür denkbar. Denkbar und vorteilhaft wäre zum Beispiel, wenn anstelle der Führungsrollen 35a (oder zusätzlich zu den Führungsrollen 35a) ein Gleitschuh als Führungseinrichtung vorgesehen wird. Gleitschuhe als Führungseinrichtungen haben im Unterschied zu Führungsrollen 35a den Vorteil, dass sie eine geringere Belastung auf das zu führende Profil 1 ausüben. Daneben wäre auch denkbar, jede andere Führungseinrichtung zu verwenden, die geeignet ist, das Profil 1 in den Biegekopf 34 einzuführen.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

Beispielsweise könnte das Profil auch mehr oder weniger als zwei Metallprofile zur Bildung der Armierung beinhalten oder auch ohne Einlagen oder Armierung ausgeführt sein.

Ferner könnten auch mehr als zwei Paare von Biegerollen je Biegerollensatz den jeweiligen Durchgang 4e, 5e umgeben.

### AUSFÜHRUNGSFORMEN

1. Verfahren zum Rollbiegen eines Profils (1), welches zumindest einen Querschnittsbereich (22a, 22b) aufweist, der aus einem durch Extrusion geformten Kunststoffmaterial ausgebildet ist, mit den Schritten:
   - Bereitstellen eines ersten Biegerollensatzes (4) und eines zweiten Biegerollensatzes (5), welche jeweils Biegerollen (4a-d, 5a-d) aufweisen, die derart angeordnet sind, dass zwischen den Biegerollen (4a-d, 5a-d) jedes der Biegerollensätze (4, 5) jeweils ein Durchgang (4e, 5e) ausgebildet ist, welcher ein Führen des Profils (1) ermöglicht;
   - Einschieben des Profils (1) in den ersten Biegerollensatz (4);
   - Führen des Profils (1) durch den ersten Biegerollensatz (4) und den zweiten Biegerollensatz (5) während des Einschiebens; und
   - während des Einschiebens und Führens des Profils (1), Bewegen des zweiten Biegerollensatzes (5) relativ zu dem ersten Biegerollensatz (4) in der Weise, dass der zweite Biegerollensatz (5) längs zumindest einer ersten Raumrichtung (11) und einer zu dieser nichtparallelen zweiten Raumrichtung (14) translahiert und um zumindest eine erste Rotationsachse (12) und eine zu dieser nichtparallele zweite Rotationsachse (15) rotiert, wodurch das Profil (1) um eine erste Biegeachse (13) und um eine zu der ersten Biegeachse (13) nichtparallele zweite Biegeachse (16) gebogen wird, wobei die Translationen (T1, T2) und Rotationen (R1, R2) des zweiten Biegerollensatzes (5) zumindest zeitweise simultan und/oder in vorbestimmter Folge zeitlich versetzt zueinander bewirkt werden.
2. Verfahren nach Ausführungsform 1,
   dadurch gekennzeichnet,
   dass die ersten und zweiten Raumrichtungen (11, 14) zu einer Einschieberichtung (2), längs der das Einschieben des Profils (1) erfolgt, jeweils geneigt, vorzugsweise jeweils im Wesentlichen senkrecht, ausgerichtet sind.
3. Verfahren nach Ausführungsform 1 oder 2,
   dadurch gekennzeichnet,
   dass die ersten und zweiten Raumrichtungen (11, 14) im Wesentlichen senkrecht zueinander ausgerichtet sind.
4. Verfahren nach einem der vorstehenden Ausführungsformen,
   dadurch gekennzeichnet,
   dass die erste Rotationsachse (12) im Wesentlichen senkrecht zu der ersten Raumrichtung (11) verläuft, wobei für das Biegen um die erste Biegeachse (13) die Rotation (R1) um die erste Rotationsachse (12) simultan mit der Translation (T1) entlang der ersten Raumrichtung (11) erfolgt.
5. Verfahren nach einem der vorstehenden Ausführungsformen,
   dadurch gekennzeichnet,
   dass der zweite Biegerollensatz (5) mit zumindest einem Paar (8, 9) von Biegerollen (5a-b, 5c-d) ausgebildet wird, welche Rollendrehachsen (7a-b, 7c-d) aufweisen, die zueinander parallel verlaufen.
6. Verfahren nach Ausführungsform 5,
   dadurch gekennzeichnet,
   dass der zweite Biegerollensatz (5) mit zwei Paaren (8, 9) von Biegerollen (5a-b, 5c-d) ausgebildet wird, wobei die Rollendrehachsen (7a-b, 7c-d) der Biegerollen (5a-b, 5c-d) des jeweiligen Paars (8, 9) zueinander parallel verlaufen.
7. Verfahren nach Ausführungsform 5 oder 6,
   dadurch gekennzeichnet,
   dass die zweite Rotationsachse (15) stets parallel zu den Rollendrehachsen (7c-d) eines der Paare (9) der Biegerollen (5c-d) des zweiten Biegerollensatzes (5) verläuft.
8. Verfahren nach einem der vorstehenden Ausführungsformen,
   dadurch gekennzeichnet,
   dass für das Biegen um die zweite Biegeachse (16) die Rotation (R2) um die zweite Rotationsachse (15) simultan mit der Translation (T2) entlang der zweiten Raumrichtung (14) erfolgt.
9. Verfahren nach einem der vorstehenden Ausführungsformen,
   dadurch gekennzeichnet,
   dass das Bewegen des zweiten Biegerollensatzes (5) ein zu dessen Rotationen (R1, R2) und Translationen (T1, T2) zumindest zeitweise simultanes und/oder in vorbestimmter Folge zu diesen zeitlich versetztes zusätzliches Rotieren (R3) des zweiten Biegerollensatzes (5) relativ zu dem ersten Biegerollensatz (4) um eine dritte Rotationsachse (17), welche in einem in dem Durchgang (5e) des zweiten Biegerollensatzes (5) aufgenommenen Bereich des Profils (1) im Wesentlichen tangential zu einer Bahnkurve (B) des Profils (1) verläuft, umfasst, wodurch das Profil (1) zusätzlich zur Biegung um die erste Biegeachse (13) und um die zweite Biegeachse (16) wenigstens bereichsweise mit einem Drall versehen wird.
10. Verfahren nach einem der vorstehenden Ausführungsformen,
   dadurch gekennzeichnet,
   dass die Biegerollen (4a-d) des ersten Biegerollensatzes (4) jeweils ausschließlich durch die Bewegung des Profils (1) während des Einschiebens desselben und die Biegerollen (5a-d) des zweiten Biegerollensatzes (5) jeweils ausschließlich durch die Bewegung des Profils (1) während des Einschiebens desselben und durch die Rotationen (R1, R2) des zweiten Biegerollensatzes (5) um die ersten und zweiten Rotationsachsen (12, 15) in Drehung versetzt werden und hierbei auf dem Profil (1) abrollen.
11. Verfahren nach einem der vorstehenden Ausführungsformen,
   dadurch gekennzeichnet,
   dass das Einschieben des Profils (1) mittels einer Abzugsbandanordnung (31) bewirkt wird.
12. Verfahren nach Ausführungsform 11,
   dadurch gekennzeichnet,
   dass die Abzugsbandanordnung (31) zwei abschnittsweise parallel zueinander verlaufende, vorzugsweise endlose, Bänder (44) oder Raupenketten mit jeweils einer nachgiebigen, dem Profil (1) zugewandten Oberfläche (45) aufweist und dass das Profil (1) für das Einschieben durch Oberflächenkontakt mit den Bändern (44) oder den Raupenketten zwischen den Bändern (44) oder den Raupenketten transportiert wird.
13. Verfahren nach einem der vorstehenden Ausführungsformen,
   dadurch gekennzeichnet,
   dass das Profil (1) vor dem Einschieben in den ersten Biegerollensatz (4) zunächst eine Einlaufführung (33) mit einem oder mehreren Sätzen von Führungsrollen (35) zur Führung des Profils (1) und zum Verhindern eines Ausknickens des Profils (1) durchläuft, wobei das Profil (1) in die Einlaufführung (33) eingeschoben wird und an einem ausgangsseitigen Ende (46) der Einlaufführung (33) in den Durchgang (4e) des ersten Biegerollensatzes (4) eintritt, und wobei die Führungsrollen (35) ausschließlich durch die Bewegung des Profils (1) während des Einschiebens desselben in Drehung um ihre jeweiligen Rollendrehachsen (35a) versetzt werden.
14. Profil (1), welches zumindest einen Querschnittsbereich (22a, 22b) aufweist, der aus einem durch Extrusion geformten Kunststoffmaterial ausgebildet ist, rollgebogen mittels eines Verfahrens nach einem der vorstehenden Ansprüche.
15. Verfahren zur Herstellung gebogener Profilwerkstücke (1a) mittels einer Extrusions- und Rollbiegelinie (100), bei dem ein Profil (1) als ein kontinuierlicher Strang (1b) mittels eines Extrusionswerkzeugs (56) in zumindest einem Querschnittsbereich (22a, 22b) aus einem durch Extrusion geformten Kunststoffmaterial ausgebildet wird und innerhalb der Extrusions- und Rollbiegelinie (100) im Anschluss an den Extrusionsvorgang aufeinanderfolgende Abschnitte (61) des Profils (1) zur Bildung der gebogenen Profilwerkstücke (1a) mittels eines Verfahrens nach einem der Ansprüche 1 bis 13 einem Rollbiegen unterzogen werden.
16. Verfahren nach Ausführungsform 15,
   dadurch gekennzeichnet,
   dass während des Extrusionsvorgangs innerhalb des Extrusionswerkzeugs (56) zumindest eine Armierung (21) aus einem Metallwerkstoff, insbesondere einem Stahl, in das Kunststoffmaterial zumindest teilweise eingebettet wird.
17. Verfahren nach Ausführungsform 15 oder 16, dadurch gekennzeichnet,
   dass jeweils einer der Abschnitte (61) des Profils (1) nach dem Durchlaufen des ersten Biegerollensatzes (4) und des zweiten Biegerollensatzes (5) mittels einer auf einer Ausgangsseite (72) des zweiten Biegerollensatzes (5) im Raum bewegbaren Trenneinrichtung (67) zur Bildung eines der gebogenen Profilwerkstücke (1a) von dem kontinuierlichen Strang (1b) abgetrennt wird.
18. Verfahren nach Ausführungsform 17,
   dadurch gekennzeichnet,
   dass der Abschnitt (61) des Profils (1) nach dem Austritt aus dem zweiten Biegerollensatz (5) auf dessen Ausgangsseite (72) mittels einer Handhabungseinrichtung (80) gegriffen wird, bevor oder während der Abschnitt (61) von dem kontinuierlichen Strang (1b) abgetrennt wird, wobei die Handhabungseinrichtung (80) einer mit dem Rollbiegen einhergehenden räumlichen Bewegung des Abschnitts (61) nachgeführt wird und das erzeugte gebogene Profilwerkstück (1a) nach dem Abtrennen von dem kontinuierlichen Strang (1b) mittels der Handhabungseinrichtung (80) für eine Weiterverarbeitung oder Lagerung weitertransportiert und/oder abgelegt wird.
19. Gebogenes Profilwerkstück (1a), welches zumindest einen Querschnittsbereich (22a, 22b) aufweist, der aus einem durch Extrusion geformten Kunststoffmaterial ausgebildet ist, hergestellt mittels eines Verfahrens nach einem der Ansprüche 15 bis 18.
20. Vorrichtung (27) zum Rollbiegen eines Profils (1), welches zumindest einen Querschnittsbereich (22a, 22b) aufweist, der aus einem durch Extrusion geformten Kunststoffmaterial ausgebildet ist,
   mit einem ersten Biegerollensatz (4) und einem zweiten Biegerollensatz (5), welche jeweils Biegerollen (4a-d, 5a-d)
   aufweisen, die derart angeordnet sind, dass zwischen den Biegerollen (4a-d, 5a-d) jedes der Biegerollensätze (4, 5) jeweils ein Durchgang (4e, 5e) ausgebildet ist, welcher ein Führen des Profils (1) ermöglicht;
   mit einem Rahmen (25), an dem die Biegerollen (4a-d) des ersten Biegerollensatzes (4) gelagert sind; und
   mit einem relativ zu dem Rahmen (25) bewegbaren Biegekopf (34), der den zweiten Biegerollensatz (5) trägt;
   wobei der Biegekopf (34) derart mit dem Rahmen (25) gekoppelt ist, dass der Biegekopf (34) für ein Biegen des Profils (1) um eine erste Biegeachse (13) gegenüber dem Rahmen (25) um eine erste Rotationsachse (12) rotierbar und zumindest entlang einer ersten Raumrichtung (11) translahierbar ist;
   wobei der zweite Biegerollensatz (5) derart mit dem Biegekopf (34) gekoppelt ist, dass der zweite Biegerollensatz (5) für ein Biegen des Profils (1) um eine zu der ersten Biegeachse (13) nichtparallele zweite Biegeachse (16) relativ zu dem Biegekopf (34) um eine zweite Rotationsachse (15) rotierbar und entlang einer zweiten Raumrichtung (14) translahierbar ist; und
   wobei die ersten und zweiten Raumrichtungen (11, 14) zueinander nichtparallel und die ersten und zweiten Rotationsachsen (12, 15) zueinander nichtparallel ausgerichtet sind.
21. Vorrichtung nach Ausführungsform 20,
   dadurch gekennzeichnet,
   dass die ersten und zweiten Raumrichtungen (11, 14) zu einer Einschieberichtung (2), längs der das Profil (1) in den ersten Biegerollensatz (4) einschiebbar ist, jeweils geneigt, vorzugsweise jeweils im Wesentlichen senkrecht, ausgerichtet sind.
22. Vorrichtung nach Ausführungsform 20 oder 21,
   dadurch gekennzeichnet,
   dass die ersten und zweiten Raumrichtungen (11, 14) im Wesentlichen senkrecht zueinander ausgerichtet sind.
23. Vorrichtung nach einem der Ausführungsformen 20 bis 22, dadurch gekennzeichnet,
   dass die erste Rotationsachse (12) im Wesentlichen senkrecht zu der ersten Raumrichtung (11) verläuft und dass der Biegekopf (34) derart mit dem Rahmen (25) gekoppelt ist, dass für das Biegen des Profils (1) um die erste Biegeachse (13) der Biegekopf (34) relativ zu dem Rahmen (25) eine kombinierte Rotations- und Translationsbewegung (R1, T1) ausführen kann, bei der die Rotation (R1) um die erste Rotationsachse (12) simultan mit der Translation (T1) entlang der ersten Raumrichtung (11) erfolgt.
24. Vorrichtung nach Ausführungsform 23,
   dadurch gekennzeichnet,
   dass die Vorrichtung (27) zumindest ein erstes Verbindungsbauteil (91) und zumindest ein zweites Verbindungsbauteil (92) aufweist, wobei jedes der ersten und zweiten Verbindungsbauteile (91, 92) den Biegekopf (34) mit dem Rahmen (25) über gelenkige Verbindungen (91a, 91b, 92a, 92b) derart verbindet, dass zwischen den gelenkigen Verbindungen (91a, 91b, 92a, 92b) angeordnete Bereiche (34a, 25a) des Biegekopfes (34) und des Rahmens (25) und die Verbindungsbauteile (91, 92) ein Viergelenk bilden, das die kombinierte Rotations- und Translationsbewegung (R1, T1) des Biegekopfes (34) relativ zu dem Rahmen (25) für das Biegen des Profils (1) um die erste Biegeachse (13) ermöglicht.
25. Vorrichtung nach Ausführungsform 24,
   dadurch gekennzeichnet,
   dass die ersten und zweiten Verbindungsbauteile (91, 92) jeweils zwei der gelenkigen Verbindungen (91a, 91b, 92a, 92b) über Kreuz miteinander koppeln.
26. Vorrichtung nach einem der Ausführungsformen 20 bis 25, dadurch gekennzeichnet,
   dass der zweite Biegerollensatz (5) mit zumindest einem Paar (8, 9) von Biegerollen (5a-b, 5c-d) ausgebildet ist, welche Rollendrehachsen (7a-b, 7c-d) aufweisen, die zueinander parallel verlaufen.
27. Vorrichtung nach Ausführungsform 26,
   dadurch gekennzeichnet,
   dass der zweite Biegerollensatz (5) mit zwei Paaren (8, 9) von Biegerollen (5a-b, 5c-d) ausgebildet ist, wobei die Rollendrehachsen (7a-b, 7c-d) der Biegerollen (5a-b, 5c-d) des jeweiligen Paars (8, 9) zueinander parallel verlaufen.
28. Vorrichtung nach Ausführungsform 26 oder 27,
   dadurch gekennzeichnet,
   dass der zweite Biegerollensatz (5) derart mit dem Biegekopf (34) gekoppelt ist, dass die zweite Rotationsachse (15) stets parallel zu den Rollendrehachsen (7c-d) eines der Paare (9) von Biegerollen (5c-d) des zweiten Biegerollensatzes (5) verläuft.
29. Vorrichtung nach einem der Ausführungsformen 20 bis 28, dadurch gekennzeichnet,
   dass der zweite Biegerollensatz (5) derart mit dem Biegekopf (34) gekoppelt ist, dass für das Biegen um die zweite Biegeachse (16) die Rotation (R2) um die zweite Rotationsachse (15) simultan zu der Translation (T2) entlang der zweiten Raumrichtung (14) bewirkbar ist.
30. Vorrichtung nach einem der Ausführungsformen 20 bis 29, dadurch gekennzeichnet,
   dass der zweite Biegerollensatz (5) ferner derart mit dem Biegekopf (34) gekoppelt ist, dass der zweite Biegerollensatz (5) relativ zu dem ersten Biegerollensatz (4) um eine dritte Rotationsachse (17), welche in einem in dem Durchgang (5e) des zweiten Biegerollensatzes (5) aufgenommenen Bereich des Profils (1) im Wesentlichen tangential zu einer Bahnkurve (B) des Profils (1) verläuft, rotierbar ist, um das Profil (1) zusätzlich zur Biegung um die erste Biegeachse (13) und um die zweite Biegeachse (16) wenigstens bereichsweise mit einem Drall zu versehen.
31. Vorrichtung nach einem der Ausführungsformen 20 bis 30, dadurch gekennzeichnet,
   dass die Biegerollen (4a-d) des ersten Biegerollensatzes (4) und die Biegerollen (5a-d) des zweiten Biegerollensatzes (5) um ihre jeweiligen Rollendrehachsen (6a-d, 7a-d) frei drehbar gelagert sind.
32. Vorrichtung nach einem der Ausführungsformen 20 bis 31, dadurch gekennzeichnet,
   dass die Vorrichtung (27) ferner eine Einlaufführung (33) mit einem oder mehreren Sätzen von Führungsrollen (35) zur Führung des Profils (1) und zum Verhindern eines Ausknickens des Profils (1) aufweist, wobei die Einlaufführung (33) derart angeordnet ist, dass das in die Einlaufführung (33) eingeschobene Profil (1) an einem ausgangsseitigen Ende (46) der Einlaufführung (33) nach Durchlaufen derselben in den Durchgang (4e) des ersten Biegerollensatzes (4) eintritt, und wobei die Führungsrollen (35) um ihre jeweiligen Rollendrehachsen (35a) frei drehbar gelagert sind.
33. Extrusions- und Rollbiegelinie (100) zur Herstellung gebogener Profilwerkstücke (1a), mit
   einem Extrusionswerkzeug (56), welches dafür eingerichtet ist, ein Profil (1) als einen kontinuierlichen Strang (1b) in zumindest einem Querschnittsbereich (22a, 22b) aus einem durch Extrusion geformten Kunststoffmaterial auszubilden, und
   mit einer Vorrichtung (27) nach einem der Ansprüche 20 bis 32, welche auf einer Austrittsseite (58) des Extrusionswerkzeugs (56) angeordnet und dafür vorgesehen ist, im Anschluss an den Extrusionsvorgang aufeinanderfolgende Abschnitte (61) des Profils (1) zur Bildung der gebogenen Profilwerkstücke (1a) einem Rollbiegen zu unterziehen.

### Bezugszeichenliste

- 1: Profil
- 1a: gebogenes Profilwerkstück
- 1b: kontinuierlicher Strang
- 2: Einschieberichtung
- 3: Längsrichtung (Profil)
- 4: erster Biegerollensatz
- 4a-d: Biegerollen (erster Biegerollensatz)
- 4e: Durchgang (erster Biegerollensatz)
- 5: zweiter Biegerollensatz
- 5a-d: Biegerollen (zweiter Biegerollensatz)
- 5e: Durchgang (zweiter Biegerollensatz)
- 6a-d: Rollendrehachsen (Biegerollen (erster Biegerollensatz))
- 6e: Ebene (erster Biegerollensatz)
- 7a-d: Rollendrehachsen (Biegerollen(zweiter Biegerollensatz))
- 7e: Ebene (zweiter Biegerollensatz)
- 8: Paar (Biegerollen (zweiter Biegerollensatz))
- 9: Paar (Biegerollen (zweiter Biegerollensatz))
- 10: Bereich zwischen den nach innen gebogenen Schenkeln des Profils
- 11: erste Raumrichtung
- 12: erste Rotationsachse
- 13: erste Biegeachse
- 14: zweite Raumrichtung
- 15: zweite Rotationsachse
- 16: zweite Biegeachse
- 17: dritte Rotationsachse
- 21: Armierung
- 21a: Metallprofil
- 21b: Metallprofil
- 22a: erster Querschnittsbereich
- 22b: zweiter Querschnittsbereich
- 23: Außenseite (Profil)
- 24: Innenseite (Profil)
- 25: Rahmen (für ersten Biegerollensatz 4)
- 25a: Bereich (Rahmen 25)
- 26: Rahmen (für zweiten Biegerollensatz 5)
- 27: Vorrichtung
- 31: Abzugsbandanordnung
- 32: Unterkonstruktion (Vorrichtung)
- 33: Einlaufführung
- 34: Biegekopf
- 34a: Bereich (Biegekopf 34)
- 35: Führungsrolle
- 35a: Rollendrehachse (Führungsrolle)
- 36: Verstelleinrichtung
- 37: Flansch
- 41: Vorsprung
- 42: Stützbauteil
- 43: Verbindungseinrichtung
- 44: Band (Abzugsbandanordnung)
- 45: Oberfläche (Band)
- 46: ausgangsseitiges Ende (Einlaufführung)
- 51: Hülse
- 51a: Mittelachse (Hülse)
- 52: Öffnung (Hülse)
- 53: Außenumfangsfläche (Hülse)
- 54: Schlitten
- 55: Ausnehmung (Schlitten)
- 56: Extrusionswerkzeug
- 57: Extruder
- 58: Austrittsseite (Extrusionswerkzeug)
- 61: Abschnitt (Profil)
- 61a: Ende (Abschnitt (Profil))
- 61b: Ende (Abschnitt (Profil))
- 62: Umformeinrichtung
- 63: Vorratsrolle
- 64: Metallband
- 65: Messeinrichtung
- 66: Richtung
- 67: Trenneinrichtung
- 71: Messer
- 72: Ausgangsseite (zweiter Biegerollensatz)
- 80: Handhabungseinrichtung
- 81: Ablageplatz
- 82: Greifwerkzeug
- 91: erstes Verbindungsbauteil
- 91a: erste gelenkige Verbindung
- 91b: zweite gelenkige Verbindung
- 92: zweites Verbindungsbauteil
- 92a: dritte gelenkige Verbindung
- 92b: vierte gelenkige Verbindung
- 100: Extrusions- und Rollbiegelinie

- A: Achse
- B: Bahnkurve
- F: Kraft

- R1: erste Rotation
- R2: zweite Rotation
- R3: dritte Rotation
- T1: erste Translation
- T2: zweite Translation
- Tx: Translation in Richtung x

- x: Richtung
- y: Richtung
- z: Richtung

## Patentansprüche

1. Verfahren zum Rollbiegen eines Profils (1), welches zumindest einen Querschnittsbereich (22a, 22b) aufweist, der aus einem durch Extrusion geformten Kunststoffmaterial ausgebildet ist, mit den Schritten:
- Bereitstellen eines ersten Biegerollensatzes (4) und eines zweiten Biegerollensatzes (5), welche jeweils Biegerollen (4a-d, 5a-d) aufweisen, die derart angeordnet sind, dass zwischen den Biegerollen (4a-d, 5a-d) jedes der Biegerollensätze (4, 5) jeweils ein Durchgang (4e, 5e) ausgebildet ist, welcher ein Führen des Profils (1) ermöglicht;
- Einschieben des Profils (1) in den ersten Biegerollensatz (4);
- Führen des Profils (1) durch den ersten Biegerollensatz (4) und den zweiten Biegerollensatz (5) während des Einschiebens; und
**gekennzeichnet durch**
- während des Einschiebens und Führens des Profils (1), Bewegen des zweiten Biegerollensatzes (5) relativ zu dem ersten Biegerollensatz (4) in der Weise, dass der zweite Biegerollensatz (5) längs zumindest einer ersten Raumrichtung (11) und einer zu dieser nichtparallelen zweiten Raumrichtung (14) translahiert und um zumindest eine erste Rotationsachse (12) und eine zu dieser nichtparallele zweite Rotationsachse (15) rotiert, wodurch das Profil (1) um eine erste Biegeachse (13) und um eine zu der ersten Biegeachse (13) nichtparallele zweite Biegeachse (16) gebogen wird, wobei die Translationen (T1, T2) und Rotationen (R1, R2) des zweiten Biegerollensatzes (5) zumindest zeitweise simultan und/oder in vorbestimmter Folge zeitlich versetzt zueinander bewirkt werden, wobei die erste Rotationsachse (12) im Wesentlichen senkrecht zu der ersten Raumrichtung (11) verläuft, wobei für das Biegen um die erste Biegeachse (13) die Rotation (R1) um die erste Rotationsachse (12) simultan mit der Translation (T1) entlang der ersten Raumrichtung (11) erfolgt um den zweiten Biegerollensatz (5) derart auszurichten, dass das Profil (1) in den Durchgang (5e) des zweiten Biegerollensatzes senkrecht zu einer Ebene (7e) der Rollendrehachsen (7a, 7b) des zweiten Biegerollensatzes (5) einläuft.

2. Verfahren nach Anspruch 1,
**dadurch gekennzeichnet,**
**dass** die ersten und zweiten Raumrichtungen (11, 14) zu einer Einschieberichtung (2), längs der das Einschieben des Profils (1) erfolgt, jeweils geneigt, vorzugsweise jeweils im Wesentlichen senkrecht, ausgerichtet sind und/oder im Wesentlichen senkrecht zueinander ausgerichtet sind.

3. Verfahren nach einem der vorstehenden Ansprüche,
**dadurch gekennzeichnet,**
**dass** der zweite Biegerollensatz (5) mit zumindest einem Paar (8, 9) von Biegerollen (5a-b, 5c-d), insbesondere mit zwei Paaren (8, 9) von Biegerollen (5a-b, 5c-d), ausgebildet wird, welche Rollendrehachsen (7a-b, 7c-d) aufweisen, wobei die Rollendrehachsen (7a-b, 7c-d) der Biegerollen (5a-b, 5cd) des jeweiligen Paars (8, 9) zueinander parallel verlaufen, und/oder die zweite Rotationsachse (15) stets parallel zu den Rollendrehachsen (7c-d) eines der Paare (9) der Biegerollen (5c-d) des zweiten Biegerollensatzes (5) verläuft.

4. Verfahren nach einem der vorstehenden Ansprüche,
**dadurch gekennzeichnet,**
**dass** für das Biegen um die zweite Biegeachse (16) die Rotation (R2) um die zweite Rotationsachse (15) simultan mit der Translation (T2) entlang der zweiten Raumrichtung (14) erfolgt.

5. Verfahren nach einem der vorstehenden Ansprüche,
**dadurch gekennzeichnet,**
**dass** das Bewegen des zweiten Biegerollensatzes (5) ein zu dessen Rotationen (R1, R2) und Translationen (T1, T2) zumindest zeitweise simultanes und/oder in vorbestimmter Folge zu diesen zeitlich versetztes zusätzliches Rotieren (R3) des zweiten Biegerollensatzes (5) relativ zu dem ersten Biegerollensatz (4) um eine dritte Rotationsachse (17), welche in einem in dem Durchgang (5e) des zweiten Biegerollensatzes (5) aufgenommenen Bereich des Profils (1) im Wesentlichen tangential zu einer Bahnkurve (B) des Profils (1) verläuft, umfasst, wodurch das Profil (1) zusätzlich zur Biegung um die erste Biegeachse (13) und um die zweite Biegeachse (16) wenigstens bereichsweise mit einem Drall versehen wird.

6. Verfahren nach einem der vorstehenden Ansprüche,
**dadurch gekennzeichnet,**
**dass** die Biegerollen (4a-d) des ersten Biegerollensatzes (4) jeweils ausschließlich durch die Bewegung des Profils (1) während des Einschiebens desselben und die Biegerollen (5a-d) des zweiten Biegerollensatzes (5) jeweils ausschließlich durch die Bewegung des Profils (1) während des Einschiebens desselben und durch die Rotationen (R1, R2) des zweiten Biegerollensatzes (5) um die ersten und zweiten Rotationsachsen (12, 15) in Drehung versetzt werden und hierbei auf dem Profil (1) abrollen und/oder das Einschieben des Profils (1) mittels einer Abzugsbandanordnung (31) bewirkt wird, insbesondere mittels einer Abzugsbandanordnung (31) die zwei abschnittsweise parallel zueinander verlaufende, vorzugsweise endlose, Bänder (44) oder Raupenketten mit jeweils einer nachgiebigen, dem Profil (1) zugewandten Oberfläche (45) aufweist, wobei das Profil (1) für das Einschieben durch Oberflächenkontakt mit den Bändern (44) oder den Raupenketten zwischen den Bändern (44) oder den Raupenketten transportiert wird.

7. Verfahren nach einem der vorstehenden Ansprüche,
**dadurch gekennzeichnet,**
**dass** das Profil (1) vor dem Einschieben in den ersten Biegerollensatz (4) zunächst eine Einlaufführung (33) mit einem oder mehreren Sätzen von Führungsrollen (35) zur Führung des Profils (1) und zum Verhindern eines Ausknickens des Profils (1) durchläuft, wobei das Profil (1) in die Einlaufführung (33) eingeschoben wird und an einem ausgangsseitigen Ende (46) der Einlaufführung (33) in den Durchgang (4e) des ersten Biegerollensatzes (4) eintritt, und wobei die Führungsrollen (35) ausschließlich durch die Bewegung des Profils (1) während des Einschiebens desselben in Drehung um ihre jeweiligen Rollendrehachsen (35a) versetzt werden.

8. Verfahren zur Herstellung gebogener Profilwerkstücke (1a) mittels einer Extrusions- und Rollbiegelinie (100), bei dem ein Profil (1) als ein kontinuierlicher Strang (1b) mittels eines Extrusionswerkzeugs (56) in zumindest einem Querschnittsbereich (22a, 22b) aus einem durch Extrusion geformten Kunststoffmaterial ausgebildet wird und innerhalb der Extrusions- und Rollbiegelinie (100) im Anschluss an den Extrusionsvorgang aufeinanderfolgende Abschnitte (61) des Profils (1) zur Bildung der gebogenen Profilwerkstücke (1a) mittels eines Verfahrens nach einem der Ansprüche 1 bis 7 einem Rollbiegen unterzogen werden.

9. Verfahren nach Anspruch 8,
**dadurch gekennzeichnet,**
**dass** während des Extrusionsvorgangs innerhalb des Extrusionswerkzeugs (56) zumindest eine Armierung (21) aus einem Metallwerkstoff, insbesondere einem Stahl, in das Kunststoffmaterial zumindest teilweise eingebettet wird und/oder jeweils einer der Abschnitte (61) des Profils (1) nach dem Durchlaufen des ersten Biegerollensatzes (4) und des zweiten Biegerollensatzes (5) mittels einer auf einer Ausgangsseite (72) des zweiten Biegerollensatzes (5) im Raum bewegbaren Trenneinrichtung (67) zur Bildung eines der gebogenen Profilwerkstücke (1a) von dem kontinuierlichen Strang (1b) abgetrennt wird, und/oder der Abschnitt (61) des Profils (1) nach dem Austritt aus dem zweiten Biegerollensatz (5) auf dessen Ausgangsseite (72) mittels einer Handhabungseinrichtung (80) gegriffen wird, bevor oder während der Abschnitt (61) von dem kontinuierlichen Strang (1b) abgetrennt wird, wobei die Handhabungseinrichtung (80) einer mit dem Rollbiegen einhergehenden räumlichen Bewegung des Abschnitts (61) nachgeführt wird und das erzeugte gebogene Profilwerkstück (1a) nach dem Abtrennen von dem kontinuierlichen Strang (1b) mittels der Handhabungseinrichtung (80) für eine Weiterverarbeitung oder Lagerung weitertransportiert und/oder abgelegt wird.

10. Vorrichtung (27) zum Rollbiegen eines Profils (1), welches zumindest einen Querschnittsbereich (22a, 22b) aufweist, der aus einem durch Extrusion geformten Kunststoffmaterial ausgebildet ist,
mit einem ersten Biegerollensatz (4) und einem zweiten Biegerollensatz (5), welche jeweils Biegerollen (4a-d, 5a-d) aufweisen, die derart angeordnet sind, dass zwischen den Biegerollen (4a-d, 5a-d) jedes der Biegerollensätze (4, 5) jeweils ein Durchgang (4e, 5e) ausgebildet ist, welcher ein Führen des Profils (1) ermöglicht;
mit einem Rahmen (25), an dem die Biegerollen (4a-d) des ersten Biegerollensatzes (4) gelagert sind; und
mit einem relativ zu dem Rahmen (25) bewegbaren Biegekopf (34), der den zweiten Biegerollensatz (5) trägt;
wobei der Biegekopf (34) derart mit dem Rahmen (25) gekoppelt ist, dass der Biegekopf (34) für ein Biegen des Profils (1) um eine erste Biegeachse (13) gegenüber dem Rahmen (25) um eine erste Rotationsachse (12) rotierbar und zumindest entlang einer ersten Raumrichtung (11) translahierbar ist;
wobei der zweite Biegerollensatz (5) derart mit dem Biegekopf (34) gekoppelt ist, dass der zweite Biegerollensatz (5) für ein Biegen des Profils (1) um eine zu der ersten Biegeachse (13) nichtparallele zweite Biegeachse (16) relativ zu dem Biegekopf (34) um eine zweite Rotationsachse (15) rotierbar und entlang einer zweiten Raumrichtung (14) translahierbar ist;
wobei die ersten und zweiten Raumrichtungen (11, 14) zueinander nichtparallel und die ersten und zweiten Rotationsachsen (12, 15) zueinander nichtparallel ausgerichtet sind, wobei die erste Rotationsachse (12) im Wesentlichen senkrecht zu der ersten Raumrichtung (11) verläuft und dass der Biegekopf (34) derart mit dem Rahmen (25) gekoppelt ist, dass für das Biegen des Profils (1) um die erste Biegeachse (13) der Biegekopf (34) relativ zu dem Rahmen (25) eine kombinierte Rotations- und Translationsbewegung (R1, T1) ausführen kann, bei der die Rotation (R1) um die erste Rotationsachse (12) simultan mit der Translation (T1) entlang der ersten Raumrichtung (11) erfolgt um den zweiten Biegerollensatz (5) derart auszurichten, dass das Profil (1) in den Durchgang (5e) des zweiten Biegerollensatzes senkrecht zu einer Ebene (7e) der Rollendrehachsen (7a, 7b) des zweiten Biegerollensatzes (5) einläuft.

11. Vorrichtung nach Anspruch 10,
**dadurch gekennzeichnet,**
**dass** die ersten und zweiten Raumrichtungen (11, 14) zu einer Einschieberichtung (2), längs der das Profil (1) in den ersten Biegerollensatz (4) einschiebbar ist, jeweils geneigt, vorzugsweise jeweils im Wesentlichen senkrecht, ausgerichtet sind und/oder im Wesentlichen senkrecht zueinander ausgerichtet sind.

12. Vorrichtung nach Anspruch 10 oder 11,
**dadurch gekennzeichnet,**
**dass** die Vorrichtung (27) zumindest ein erstes Verbindungsbauteil (91) und zumindest ein zweites Verbindungsbauteil (92) aufweist, wobei jedes der ersten und zweiten Verbindungsbauteile (91, 92) den Biegekopf (34) mit dem Rahmen (25) über gelenkige Verbindungen (91a, 91b, 92a, 92b) derart verbindet, dass zwischen den gelenkigen Verbindungen (91a, 91b, 92a, 92b) angeordnete Bereiche (34a, 25a) des Biegekopfes (34) und des Rahmens (25) und die Verbindungsbauteile (91, 92) ein Viergelenk bilden, das die kombinierte Rotations- und Translationsbewegung (R1, T1) des Biegekopfes (34) relativ zu dem Rahmen (25) für das Biegen des Profils (1) um die erste Biegeachse (13) ermöglicht.

13. Vorrichtung nach Anspruch 12,
**dadurch gekennzeichnet,**
**dass** die ersten und zweiten Verbindungsbauteile (91, 92) jeweils zwei der gelenkigen Verbindungen (91a, 91b, 92a, 92b) über Kreuz miteinander koppeln.

14. Vorrichtung nach einem der Ansprüche 10 bis 13,
**dadurch gekennzeichnet,**
**dass** der zweite Biegerollensatz (5) mit zumindest einem Paar (8, 9) von Biegerollen (5a-b, 5c-d), insbesondere mit zwei Paaren (8, 9) von Biegerollen (5a-b, 5c-d), ausgebildet ist, welche Rollendrehachsen (7a-b, 7c-d) aufweisen, wobei die Rollendrehachsen (7a-b, 7c-d) der Biegerollen (5a-b, 5c-d) des jeweiligen Paars (8, 9) zueinander parallel verlaufen, und/oder der zweite Biegerollensatz (5) derart mit dem Biegekopf (34) gekoppelt ist, dass die zweite Rotationsachse (15) stets parallel zu den Rollendrehachsen (7c-d) eines der Paare (9) von Biegerollen (5c-d) des zweiten Biegerollensatzes (5) verläuft.

15. Vorrichtung nach einem der Ansprüche 10 bis 14,
**dadurch gekennzeichnet,**
**dass** der zweite Biegerollensatz (5) derart mit dem Biegekopf (34) gekoppelt ist, dass für das Biegen um die zweite Biegeachse (16) die Rotation (R2) um die zweite Rotationsachse (15) simultan zu der Translation (T2) entlang der zweiten Raumrichtung (14) bewirkbar ist und/oder derart mit dem Biegekopf (34) gekoppelt ist, dass der zweite Biegerollensatz (5) relativ zu dem ersten Biegerollensatz (4) um eine dritte Rotationsachse (17), welche in einem in dem Durchgang (5e) des zweiten Biegerollensatzes (5) aufgenommenen Bereich des Profils (1) im Wesentlichen tangential zu einer Bahnkurve (B) des Profils (1) verläuft, rotierbar ist, um das Profil (1) zusätzlich zur Biegung um die erste Biegeachse (13) und um die zweite Biegeachse (16) wenigstens bereichsweise mit einem Drall zu versehen.

16. Vorrichtung nach einem der Ansprüche 10 bis 15,
**dadurch gekennzeichnet,**
**dass** die Biegerollen (4a-d) des ersten Biegerollensatzes (4) und die Biegerollen (5a-d) des zweiten Biegerollensatzes (5) um ihre jeweiligen Rollendrehachsen (6a-d, 7a-d) frei drehbar gelagert sind und/oder die Vorrichtung (27) ferner eine Einlaufführung (33) mit einem oder mehreren Sätzen von Führungsrollen (35) zur Führung des Profils (1) und zum Verhindern eines Ausknickens des Profils (1) aufweist, wobei die Einlaufführung (33) derart angeordnet ist, dass das in die Einlaufführung (33) eingeschobene Profil (1) an einem ausgangsseitigen Ende (46) der Einlaufführung (33) nach Durchlaufen derselben in den Durchgang (4e) des ersten Biegerollensatzes (4) eintritt, und wobei die Führungsrollen (35) um ihre jeweiligen Rollendrehachsen (35a) frei drehbar gelagert sind.

## Claims

1. Method for roll-bending a profile (1) which has at least one cross-sectional region (22a, 22b) formed from a plastics material shaped by extrusion, comprising the steps of:
- providing a first set (4) of bending rollers and a second set (5) of bending rollers, which each comprise bending rollers (4a-d, 5a-d) arranged in such a way that in each case a passage (4e, 5e) which makes it possible to guide the profile (1) is formed between the bending rollers (4a-d, 5a-d) of each of the sets (4, 5) of bending rollers;
- inserting the profile (1) into the first set (4) of bending rollers;
- guiding the profile (1) through the first set (4) of bending rollers and the second set (5) of bending rollers during the insertion; and
**characterized by**
- while the profile (1) is being inserted and guided, moving the second set (5) of bending rollers relative to the first set (4) of bending rollers in such a way that the second set (5) of bending rollers is translated along at least a first spatial direction (11) and a second spatial direction (14) non-parallel thereto and rotated about at least a first rotation axis (12) and a second rotation axis (15) non-parallel thereto, causing the profile (1) to be bent about a first bending axis (13) and about a second bending axis (16) non-parallel to the first bending axis (13), the translations (T1, T2) and rotations (R1, R2) of the second set (5) of bending rollers being brought about simultaneously at least at times and/or mutually temporally offset in a predetermined sequence, wherein the first rotation axis (12) extends substantially perpendicular to the first spatial direction (11), the rotation (R1) about the first rotation axis (12) taking place simultaneously with the translation (T1) along the first spatial direction (11) for the bending about the first bending axis (13) in order to orient the second set (5) of bending rollers in such a manner that the profile (1) enters the passage (5e) of the second set of bending rollers perpendicularly to a plane (7e) of the roller rotation axes (7a, 7b) of the second set (5) of bending rollers.

2. Method according to claim 1,
**characterised in**
**that** the first and second spatial directions (11, 14) are each orientated at an inclination to, preferably each substantially perpendicular to, an insertion direction (2) in which the profile (1) is inserted, and/or are orientated substantially mutually perpendicular.

3. Method according to any of the preceding claims,
**characterised in**
**that** the second set (5) of bending rollers is formed with at least one pair (8, 9) of bending rollers (5a-b, 5c-d), in particular with two pairs (8, 9) of bending rollers (5a-b, 5c-d), which have roller rotation axes (7a-b, 7c-d), the roller rotation axes (7a-b, 7c-d) of the bending rollers (5a-b, 5c-d) of each pair (8, 9) extending mutually parallel, and/or the second rotation axis (15) always extending parallel to the roller rotation axes (7c-d) of one of the pairs (9) of bending rollers (5c-d) of the second set (5) of bending rollers.

4. Method according to any of the preceding claims,
**characterised in**
**that** the rotation (R2) about the second rotation axis (15) takes place simultaneously with the translation (T2) along the second spatial direction (14) for the bending about the second bending axis (16).

5. Method according to any of the preceding claims,
**characterised in**
**that** the movement of the second set (5) of bending rollers comprises an additional rotation (R3) of the second set (5) of bending rollers, simultaneous at least at times with the rotations (R1, R2) and translations (T1, T2) thereof and/or in a predetermined sequence temporally offset therewith, relative to the first set (4) of bending rollers, about a third rotation axis (17) which extends substantially tangential to a curved path (B) of the profile (1) in a region of the profile (1) received in the passage (5e) in the second set (5) of bending rollers, causing the profile (1) to be provided with a twist at least in regions, in addition to the bending about the first bending axis (13) and about the second bending axis (16).

6. Method according to any of the preceding claims,
**characterised in**
**that** the bending rollers (4a-d) of the first set (4) of bending rollers are each set in rotation exclusively by the movement of the profile (1) during the insertion thereof, and the bending rollers (5a-d) of the second set (5) of bending rollers are each set in rotation exclusively by the movement of the profile (1) during the insertion thereof and by the rotations (R1, R2) of the second set (5) of bending rollers about the first and second rotation axes (12, 15), and thus roll along on the profile (1), and/or the insertion of the profile (1) is brought about using a discharge conveyor (31), in particular using a discharge conveyor (31) which has two preferably endless belts (44) or caterpillar tracks, extending mutually parallel in portions and each having a resilient surface (45) facing the profile (1), the profile (1) being transported between the belts (44) or caterpillar tracks for the insertion by way of surface contact with the belts (44) or caterpillar tracks.

7. Method according to any of the preceding claims,
**characterised in**
**that** the profile (1), prior to insertion into the first set (4) of bending rollers, initially passes through an entry guide (33) having one or more sets of guide rollers (35) for guiding the profile (1) and for preventing kinking of the profile (1), the profile (1) being inserted into the entry guide (33) and entering the passage (4e) in the first set (4) of bending rollers at the output end (46) of the entry guide (33), and the guide rollers (35) being set in rotation about the respective roller rotation axes (35a) thereof exclusively by the movement of the profile (1) during the insertion.

8. Method for producing bent profile workpieces (1a) using an extrusion and roll-bending line (100), in which a profile (1) in the form of a continuous strand (1b) is formed from a plastics material shaped by extrusion in at least one cross-sectional region (22a, 22b) using an extrusion tool (56), and inside the extrusion and roll-bending line (100), subsequent to the extrusion process, successive portions (61) of the profile (1) are subjected to roll-bending to form the bent profile workpieces (1a) by a method according to any of claims 1 to 7.

9. Method according to claim 8,
**characterised in**
**that**, during the extrusion process inside the extrusion tool (56), at least one reinforcement (21) made of a metal material, in particular a steel, is embedded in the plastics material at least in part, and/or in each case one of the portions (61) of the profile (1), after passing through the first set (4) of bending rollers and the second set (5) of bending rollers, is separated off from the continuous strand (1b) to form one of the curved profile workpieces (1a) by means of a separation device (67) movable in space on an output side (72) of the second set (5) of bending rollers, and/or the portion (61) of the profile (1), after exiting the second set (5) of bending rollers on the output side (72) thereof, is gripped by a handling device (80), before or while the portion (61) is separated off from the continuous strand (1b), the handling device (80) being tracked to a spatial movement of the portion (61) which accompanies the roll-bending, and the produced bent profile workpiece (1a), after being separated off from the continuous strand (1b), being transported onwards and/or set down by the handling device (80) for further processing or for storage.

10. Device (27) for roll-bending a profile (1) which has at least one cross-sectional region (22a, 22b) formed from a plastics material shaped by extrusion,
comprising a first set (4) of bending rollers and a second set (5) of bending rollers, which each comprise bending rollers (4a-d, 5a-d) arranged in such a way that in each case a passage (4e, 5e) which makes it possible to guide the profile (1) is formed between the bending rollers (4a-d, 5a-d) of each of the sets (4, 5) of bending rollers;
comprising a frame (25) on which the bending rollers (4a-d) of the first set (4) of bending rollers are mounted;
comprising a bending head (34), which is movable relative to the frame (25) and carries the second set (5) of bending rollers;
the bending head (34) being coupled to the frame (25) in such a way that the bending head (34) is rotatable about a first rotation axis (12) and translatable at least along a first spatial direction (11) with respect to the frame (25) for bending the profile (1) about a first bending axis (13);
the second bending roller set (5) being coupled to the bending head (34) in such a way that the second set (5) of bending rollers is rotatable about a second rotation axis (15) and translatable along a second spatial direction (14) relative to the bending head (34) for bending the profile (1) about a second bending axis (16) non-parallel to the first bending axis (13);
the first and second spatial directions (11, 14) being orientated mutually non-parallel and the first and second rotation axes (12, 15) being orientated mutually non-parallel, wherein the first rotation axis (12) extends substantially perpendicular to the first spatial direction (11), and in that the bending head (34) is coupled to the frame (25) in such a way that, for bending the profile (1) about the first bending axis (13), the bending head (34) can perform a combined rotational and translational movement (R1, T1) relative to the frame (25), during which the rotation (R1) about the first rotation axis (12) takes place simultaneously with the translation (T1) along the first spatial direction (11) in order to orient the second set (5) of bending rollers in such a manner that the profile (1) enters the passage (5e) of the second set of bending rollers perpendicularly to a plane (7e) of the roller rotation axes (7a, 7b) of the second set (5) of bending rollers.

11. Device according to claim 10,
**characterised in**
**that** the first and second spatial directions (11, 14) are each orientated at an inclination to, preferably each substantially perpendicular to, an insertion direction (2) in which the profile (1) is inserted into the first set (4) of bending rollers, and/or are orientated substantially mutually perpendicular.

12. Device according to claim 10 or 11,
**characterised in**
**that** the device (27) comprises at least a first connection component (91) and at least a second connection component (92), each of the first and second connection components (91, 92) connecting the bending head (34) to the frame (25) via articulated connections (91a, 91b, 92a, 92b) in such a way that regions (34a, 25a) of the bending head (34) and frame (25), which regions are arranged between the articulated connections (91a, 91b, 92a, 92b), and the connection components (91, 92) form a four-joint link which makes possible the combined rotational and translational movement (R1, T1) of the bending head (34) relative to the frame (25) for bending the profile (1) about the first bending axis (13).

13. Device according to claim 12,
**characterised in**
**that** the first and second connection components (91, 92) each couple two of the articulated connections (91a, 91b, 92a, 92b) crosswise.

14. Device according to any of claims 10 to 13,
**characterised in**
**that** the second set (5) of bending rollers is formed with at least one pair (8, 9) of bending rollers (5a-b, 5c-d), in particular with two pairs (8, 9) of bending rollers (5a-b, 5c-d), which have roller rotation axes (7a-b, 7c-d), the roller rotation axes (7a-b, 7c-d) of the bending rollers (5a-b, 5c-d) of each pair (8, 9) extending mutually parallel, and/or the second set (5) of bending rollers being connected to the bending head (34) in such a way that the second rotation axis (15) always extends parallel to the roller rotation axes (7c-d) of one of the pairs (9) of bending rollers (5c-d) of the second set (5) of bending rollers.

15. Device according to any of claims 10 to 14,
**characterised in**
**that** the second set (5) of bending rollers is coupled to the bending head (34) in such a way that, for the bending about the second bending axis (16), the rotation (R2) about the second rotation axis (15) can be brought about simultaneously with the translation (T2) along the second spatial direction (14), and/or is coupled to the bending head (34) in such a way that the second set (5) of bending rollers is rotatable relative to the first set (4) of bending rollers about a third rotation axis (17) which extends substantially tangential to a curved path (B) of the profile (1) in a region of the profile (1) received in the passage (5e) in the second set (5) of bending rollers, so as to provide the profile (1) with a twist at least in regions, in addition to the bending about the first bending axis (13) and about the second bending axis (16).

16. Device according to any of claims 10 to 15,
**characterised in**
**that** the bending rollers (4a-d) of the first set (4) of bending rollers and the bending rollers (5a-d) of the second set (5) of bending rollers are mounted freely rotatable about the respective roller rotation axes (6a-d, 7a-d) thereof, and/or the device (27) further comprises an entry guide (33) having one or more sets of guide rollers (35) for guiding the profile (1) and for preventing kinking of the profile (1), the entry guide (33) being arranged in such a way that the profile (1) inserted into the entry guide (33) enters the passage (4e) in the first set (4) of bending rollers at the output end (46) of the entry guide (33) after passing through said guide, and the guide rollers (35) being mounted freely rotatable about the respective roller rotation axes (35a) thereof.

## Revendications

1. Procédé de cintrage d'un profilé (1), qui comporte au moins une zone de section transversale (22a, 22b), qui est réalisée à partir d'une matière plastique formée par extrusion, comprenant les étapes consistant à :
- mettre à disposition un premier jeu de galets de cintrage (4) et un second jeu de galets de cintrage (5), qui comportent respectivement des galets de cintrage (4a-d, 5a-d), qui sont disposés de telle manière qu'un passage (4e, 5e) est formé respectivement entre les galets de cintrage (4a-d, 5a-d) de chacun des jeux de galets de cintrage (4, 5), ledit passage permettant un guidage du profilé (1) ;
- introduire le profilé (1) dans le premier jeu de galets de cintrage (4) ;
- guider le profilé (1) à travers le premier jeu de galets de cintrage (4) et le second jeu de galets de cintrage (5) pendant l'introduction ; et
characterisé par
- pendant l'introduction et le guidage du profilé (1), déplacer le second jeu de galets de cintrage (5) par rapport au premier jeu de galets de cintrage (4) de telle manière que le second jeu de galets de cintrage (5) effectue une translation le long d'au moins une première direction dans l'espace (11) et une seconde direction dans l'espace (14) non parallèle à la première et effectue une rotation sur au moins un premier axe de rotation (12) et un deuxième axe de rotation (15) non parallèle au premier, ce par quoi le profilé (1) est cintré sur un premier axe de cintrage (13) et sur un second axe de cintrage (16) non parallèle au premier axe de cintrage (13), les translations (T1, T2) et les rotations (R1, R2) du second jeu de galets de cintrage (5) étant provoquées au moins temporairement simultanément et/ou de manière décalée dans le temps dans un ordre prédéfini, le premier axe de rotation (12) étant sensiblement perpendiculaire à la première direction dans l'espace (11), la rotation (R1) sur le premier axe de rotation (12) s'effectuant simultanément à la translation (T1) le long de la première direction dans l'espace (11) pour le cintrage sur le premier axe de cintrage (13) afin d'orienter le second jeu de galets de cintrage (5) de telle manière que le profilé (1) entre dans le passage (5e) du second jeu de galets de cintrage perpendiculairement à un plan (7e) des axes de rotation de galet (7a, 7b) du second jeu de galets de cintrage (5).

2. Procédé selon la revendication 1,
**caractérisé en ce que**
les première et seconde directions dans l'espace (11, 14) ont une orientation respectivement inclinée, de préférence respectivement sensiblement perpendiculaire, par rapport à une direction d'introduction (2), le long de laquelle l'introduction du profilé (1) se fait, et/ou ont une orientation sensiblement perpendiculaire l'une par rapport à l'autre.

3. Procédé selon l'une des revendications précédentes,
**caractérisé en ce que**
le second jeu de galets de cintrage (5) est conçu avec au moins une paire (8, 9) de galets de cintrage (5a-b, 5c-d), en particulier avec deux paires (8, 9) de galets de cintrage (5a-b, 5c-d), qui comportent des axes de rotation de galet (7a-b, 7c-d), les axes de rotation de galet (7a-b, 7c-d) des galets de cintrage (5a-b, 5c-d) de la paire (8, 9) respective étant parallèles entre eux, et/ou le deuxième axe de rotation (15) étant toujours parallèle aux axes de rotation de galet (7c-d) de l'une des paires (9) des galets de cintrage (5c-d) du second jeu de galets de cintrage (5).

4. Procédé selon l'une des revendications précédentes,
**caractérisé en ce que**
pour le cintrage sur le second axe de cintrage (16), la rotation (R2) sur le deuxième axe de rotation (15) s'effectue simultanément à la translation (T2) le long de la seconde direction dans l'espace (14).

5. Procédé selon l'une des revendications précédentes,
**caractérisé en ce que**
le déplacement du second jeu de galets de cintrage (5) comprend une rotation (R3) supplémentaire du second jeu de galets de cintrage (5) par rapport au premier jeu de galets de cintrage (4) sur un troisième axe de rotation (17), qui s'étend dans une direction sensiblement tangentielle à une trajectoire (B) du profilé (1) dans une zone du profilé (1) reçue dans le passage (5e) du second jeu de galets de cintrage (5), cette rotation (R3) étant au moins temporairement simultanée aux rotations (R1, R2) et translations (T1, T2) dudit second jeu de galets de cintrage (5) et/ou décalée dans le temps dans un ordre prédéfini par rapport à celles-ci, ce par quoi le profilé (1) est pourvu au moins sur certaines parties d'une torsion en plus du cintrage sur le premier axe de cintrage (13) et sur le second axe de cintrage (16).

6. Procédé selon l'une des revendications précédentes,
**caractérisé en ce que**
les galets de cintrage (4a-d) du premier jeu de galets de cintrage (4) sont mis en rotation respectivement exclusivement par le mouvement du profilé (1) pendant l'introduction de ce dernier et les galets de cintrage (5a-d) du second jeu de galets de cintrage (5) sont mis en rotation respectivement exclusivement par le mouvement du profilé (1) pendant l'introduction de ce dernier et par les rotations (R1, R2) du second jeu de galets de cintrage (5) sur les premier et second axes de rotation (12, 15), et roulent alors sur le profilé (1), et/ou l'introduction du profilé (1) est provoquée au moyen d'un agencement de transporteur extracteur (31), en particulier au moyen d'un agencement de transporteur extracteur (31) qui comporte deux bandes (44) ou chenilles de préférence sans fin et parallèles l'une à l'autre sur certaines parties, dotées respectivement d'une surface (45) flexible tournée vers le profilé (1), le profilé (1) étant transporté pour l'introduction entre les bandes (44) ou les chenilles par le contact de surface avec les bandes (44) ou les chenilles.

7. Procédé selon l'une des revendications précédentes,
**caractérisé en ce que**
avant l'introduction dans le premier jeu de galets de cintrage (4), le profilé (1) passe d'abord par un guidage d'entrée (33) avec un ou plusieurs jeux de galets de guidage (35) destinés à guider le profilé (1) et à empêcher un flambage du profilé (1), le profilé (1) étant introduit dans le guidage d'entrée (33) et entrant dans le passage (4e) du premier jeu de galets de cintrage (4) au niveau d'une extrémité (46) côté sortie du guidage d'entrée (33), et les galets de guidage (35) étant mis en rotation sur leurs axes de rotation de galet (35a) respectifs exclusivement par le mouvement du profilé (1) pendant l'introduction de ce dernier.

8. Procédé de fabrication de pièces profilées cintrées (1a) au moyen d'une ligne d'extrusion et de cintrage (100), dans lequel un profilé (1) est réalisé sous la forme d'une barre continue (1b) au moyen d'un outil d'extrusion (56) dans au moins une zone de section transversale (22a, 22b) à partir d'une matière plastique formée par extrusion et dans la ligne d'extrusion et de cintrage (100), après le procédé d'extrusion, des segments (61) successifs du profilé (1) sont soumis à un cintrage pour former les pièces profilées cintrées (1a) au moyen d'un procédé selon l'une des revendications 1 à 7.

9. Procédé selon la revendication 8,
**caractérisé en ce que**
pendant le procédé d'extrusion dans l'outil d'extrusion (56), au moins un renforcement (21) en matériau métallique, en particulier en acier, est incorporé au moins partiellement dans la matière plastique et/ou, après le passage par le premier jeu de galets de cintrage (4) et le second jeu de galets de cintrage (5), respectivement un des segments (61) du profilé (1) est séparé au moyen d'un dispositif de séparation (67) mobile dans l'espace d'un côté sortie (72) du second jeu de galets de cintrage (5) pour former une des pièces profilées cintrées (1a) à partir de la barre continue (1b) et/ou, après la sortie hors du second jeu de galets de cintrage (5), le segment (61) du profilé (1) est saisi du côté sortie (71) de celui-ci au moyen d'un dispositif de manipulation (80), avant ou pendant que le segment (61) soit/est séparé de la barre continue (1b), le dispositif de manipulation (80) étant asservi à un mouvement du segment (61) dans l'espace accompagnant le cintrage et la pièce profilée cintrée (1a) générée étant transportée plus loin et/ou déposée après la séparation d'avec la barre continue (1) au moyen du dispositif de manipulation (80) en vue d'un traitement ultérieur ou d'un stockage.

10. Dispositif (27) de cintrage d'un profilé (1), qui comporte au moins une zone de section transversale (22a, 22b), qui est réalisée à partir d'une matière plastique formée par extrusion,
comprenant un premier jeu de galets de cintrage (4) et un second jeu de galets de cintrage (5), qui comportent respectivement des galets de cintrage (4a-d, 5a-d), qui sont disposés de telle manière qu'un passage (4e, 5e) est formé respectivement entre les galets de cintrage (4a-d, 5a-d) de chacun des jeux de galets de cintrage (4, 5), ledit passage permettant un guidage du profilé (1) ;
comprenant un cadre (25) sur lequel les galets de cintrage (4a-d) du premier jeu de galets de cintrage (4) sont montés ; et
comprenant une tête de cintrage (34) mobile par rapport au cadre (25), qui porte le second jeu de galets de cintrage (5); la tête de cintrage (34) étant couplée au cadre (25) de telle manière que la tête de cintrage (34) est rotative sur un premier axe de rotation (12) et peut effectuer une translation au moins le long d'une première direction dans l'espace (11) par rapport au cadre (25) pour un cintrage du profilé (1) sur un premier axe de cintrage (13),
le second jeu de galets de cintrage (5) étant couplé à la tête de cintrage (34) de telle manière que le second jeu de galets de cintrage (5) est rotatif sur un deuxième axe de rotation (15) et peut effectuer une translation le long d'une seconde direction dans l'espace (14) par rapport à la tête de cintrage (34) pour un cintrage du profilé (1) sur un second axe de cintrage (16) non parallèle au premier axe de cintrage (13) ;
les première et seconde directions dans l'espace (11, 14) ayant une orientation non parallèle l'une par rapport à l'autre et les premier et deuxième axes de rotation (12, 15) une orientation non parallèle l'un par rapport à l'autre, le premier axe de rotation (12) étant sensiblement perpendiculaire à la première direction dans l'espace (11) et en ce que la tête de cintrage (34) est couplée au cadre (25) de telle manière que, pour cintrer le profilé (1) sur le premier axe de cintrage (13), la tête de cintrage (34) peut exécuter un mouvement combiné de rotation et translation (R1, T1) par rapport au cadre (25), dans lequel la rotation (R1) sur le premier axe de rotation (12) se fait simultanément à la translation (T1) le long de la première direction dans l'espace (11) afin d'orienter le second jeu de galets de cintrage (5) de telle manière que le profilé (1) entre dans le passage (5e) du second jeu de galets de cintrage perpendiculairement à un plan (7e) des axes de rotation de galet (7a, 7b) du second jeu de galets de cintrage (5).

11. Dispositif selon la revendication 10,
**caractérisé en ce que**
les première et seconde directions dans l'espace (11, 14) ont une orientation respectivement inclinée, de préférence respectivement sensiblement perpendiculaire, par rapport à une direction d'introduction (2), le long de laquelle le profilé (1) peut être introduit dans le premier jeu de galets de cintrage (4) et/ou ont une orientation sensiblement perpendiculaire l'une par rapport à l'autre.

12. Dispositif selon la revendication 10 ou 11,
**caractérisé en ce que**
le dispositif (27) comporte au moins un premier élément de liaison (91) et au moins un second élément de liaison (92), chacun du premier et du second élément de liaison (91, 92) reliant la tête de cintrage (34) au cadre (25) par le biais de joints articulés (91a, 91b, 92a, 92b) de telle manière que des zones (34a, 25a) de la tête de cintrage (34) et du cadre (25) disposées entre les joints articulés (91a, 91b, 92a, 92b) et les éléments de liaison (91, 92) forment un quadrilatère articulé, qui permet le mouvement combiné de rotation et de translation (R1, T1) de la tête de cintrage (34) par rapport au cadre (25) pour le cintrage du profilé (1) sur le premier axe de cintrage (13).

13. Dispositif selon la revendication 12,
**caractérisé en ce que**
les premier et second éléments de liaison (91, 92) couplent respectivement deux des joints articulés (91a, 91b, 92a, 92b) l'un à l'autre en diagonale.

14. Dispositif selon l'une des revendications 10 à 13,
**caractérisé en ce que**
le second jeu de galets de cintrage (5) est conçu avec au moins une paire (8, 9) de galets de cintrage (5a-b, 5c-d), en particulier avec deux paires (8, 9) de galets de cintrage (5a-b, 5c-d), qui comportent des axes de rotation de galet (7a-b, 7c-d), les axes de rotation de galet (7a-b, 7c-d) des galets de cintrage (5a-b, 5c-d) de la paire (8, 9) respective étant parallèles entre eux, et/ou le second jeu de galets de cintrage (5) étant couplé à la tête de cintrage (34) de telle manière que le deuxième axe de rotation (15) est toujours parallèle aux axes de rotation de galet (7c-d) de l'une des paires (9) de galets de cintrage (5c-d) du second jeu de galets de cintrage (5).

15. Dispositif selon l'une des revendications 10 à 14,
**caractérisé en ce que**
le second jeu de galets de cintrage (5) est couplé à la tête de cintrage (34) de telle manière que, pour le cintrage sur le second axe de cintrage (16), la rotation (R2) sur le deuxième axe de rotation (15) peut être provoquée simultanément à la translation (T2) le long de la seconde direction dans l'espace (14) et/ou est couplé à la tête de cintrage (34) de telle manière que le second jeu de galets de cintrage (5) est rotatif par rapport au premier jeu de galets de cintrage (4) sur un troisième axe de rotation (17), qui s'étend dans une direction sensiblement tangentielle à une trajectoire (B) du profilé (1) dans une zone du profilé (1) reçue dans le passage (5e) du second jeu de galets de cintrage (5), pour donner au profilé (1) au moins sur certaines parties une torsion en plus du cintrage sur le premier axe de cintrage (13) et sur le second axe de cintrage (16).

16. Dispositif selon l'une des revendications 10 à 15,
**caractérisé en ce que**
les galets de cintrage (4a-d) du premier jeu de galets de cintrage (4) et les galets de cintrage (5a-d) du second jeu de galets de cintrage (5) sont montés à rotation libre sur leurs axes de rotation de galet (6a-d, 7a-d) respectifs et/ou le dispositif (27) comporte en outre un guidage d'entrée (33) doté d'un ou de plusieurs jeux de galets de guidage (35) destinés à guider le profilé (1) et à empêcher un flambage du profilé (1), le guidage d'entrée (33) étant disposé de telle manière que le profilé (1) introduit dans le guidage d'entrée (33) entre, après le passage dans celui-ci, au niveau d'une extrémité côté sortie (46) du guidage d'entrée (33) dans le passage (4e) du premier jeu de galets de cintrage (4), et les galets de guidage (35) étant montés à rotation libre sur leurs axes de rotation de galet (35a) respectifs.
